# EUROPÄISCHE PATENTANMELDUNG

(11) **EP 3 096 156 A1**
(43) Veröffentlichungstag der Anmeldung: **23.11.2016**
(21) Anmeldenummer: 15167961.0
(22) Anmeldetag: 18.05.2015
(51) Int. Cl.: G01S 7/481, G01S 17/08

(54) **VORRICHTUNG ZUR OPTISCHEN DISTANZMESSUNG ZU EINEM REFLEKTIERENDEN ZIELOBJEKT**

(71) Anmelder: HILTI Aktiengesellschaft, 9494 Schaan (LI)
(72) Erfinder: Gogolla, Torsten, 9494 Schaan (LI); Winter, Andreas, 6800 Feldkirch (AT)
(74) Vertreter: Hilti Aktiengesellschaft Corporate Intellectual Property

(57) **Zusammenfassung**

Vorrichtung zur optischen Distanzmessung zu einem reflektierenden Zielobjekt aufweisend eine Strahlquelle, einen Detektor, ein Strahlformungssystem mit einer Sendeoptik und einer Empfangsoptik und ein Laserstrahlformungselement (62), das in den Strahlengang des Laserstrahls (51) anordbar ist. Das Laserstrahlformungselement (62) ist als Sendeblendenanordnung mit mindestens einer Sendeblende (63) ausgebildet ist, wobei die mindestens eine Sendeblende (63) einen Teilstrahl (64) erzeugt und den Teilstrahl (64) auf einen oder mehrere Öffnungswinkel (α₁) aufweitet, die nicht kleiner als ein minimaler Grenzwinkel von 1,0 mrad sind.

## Beschreibung

### Technisches Gebiet

Die vorliegende Erfindung betrifft eine Vorrichtung zur optischen Distanzmessung zu einem reflektierenden Zielobjekt gemäß dem Oberbegriff des Anspruchs 1.

### Stand der Technik

DE 197 27 988 A1 offenbart eine bekannte Vorrichtung zur optischen Distanzmessung zu einem reflektierenden Zielobjekt bestehend aus einem Teleskop, einer Distanzmesseinrichtung und einer Anpasseinrichtung zum Anpassen der Laserstrahldivergenz. Die Distanzmesseinrichtung umfasst eine Strahlquelle, die einen Laserstrahl aussendet, einen Detektor, der einen am Zielobjekt reflektierten Empfangsstrahl empfängt, und ein Strahlformungssystem mit einer Sendeoptik zur Strahlformung des Laserstrahls und einer Empfangsoptik zur Strahlformung des Empfangsstrahls. Die Laserstrahldivergenz kann über den Austrittswinkel des Laserstrahls an der Strahlquelle, über die optische Weglänge zwischen der Strahlquelle und der Sendeoptik oder durch eine zusätzliche Sendeoptik hinter der Strahlquelle verändert werden. Nachteilig ist, dass alle vorgeschlagenen Maßnahmen zum Anpassen der Laserstrahldivergenz innerhalb der Distanzmesseinrichtung erfolgen und die Stabilität der Distanzmesseinrichtung reduzieren.

Aus DE 198 40 049 A1 ist eine Vorrichtung zur optischen Distanzmessung zu einem reflektierenden Zielobjekt bekannt. Die Vorrichtung umfasst eine Distanzmesseinrichtung und eine Anpasseinrichtung zum Anpassen des Laserstrahls an das Zielobjekt. Die Distanzmesseinrichtung umfasst eine oder zwei Strahlquellen, einen Detektor und ein Strahlformungssystem mit einer Sendeoptik und einer Empfangsoptik. Die eine oder zwei Strahlquellen erzeugen einen ersten Laserstrahl mit einer großen Strahldivergenz und einen zweiten Laserstrahl mit einer geringen Strahldivergenz, wobei der erste Laserstrahl zur Distanzmessung zu streuenden Zielobjekten und der zweite Laserstrahl zur Distanzmessung zu reflektierenden Zielobjekten vorgesehen sind.

Die Auswahl eines geeigneten Laserstrahls kann an den Strahlquellen oder am Detektor erfolgen. In einer Ausführungsform werden der erste und zweite Laserstrahl gleichzeitig ausgesandt und treffen auf das Zielobjekt. Im Strahlengang des Empfangsstrahls sind vor dem Detektor optische Filter angeordnet, die nur den ersten oder zweiten Laserstrahl hindurch lassen. Die optischen Filter sind in einem manuell bedienbaren oder motorisch angetriebenen Filterrad oder Filterschieber angeordnet, die einzelne optische Filter in den Strahlengang des Empfangsstrahls einbringen. Nachteilig ist, dass zwei Laserstrahlen mit unterschiedlichen Strahldivergenzen erforderlich sind, um die Distanzmessung an das Zielobjekt anzupassen. Um die unterschiedlichen Strahldivergenzen zu erzeugen, sind mehrere Strahlengänge und Strahlformungsoptiken erforderlich, die den Platzbedarf erhöhen.

DE 10 2013 205 589 A1 offenbart eine weitere bekannte Vorrichtung zur optischen Distanzmessung zu einem reflektierenden Zielobjekt bestehend aus einer Distanzmesseinrichtung und einer Anpasseinrichtung, die außerhalb der Distanzmesseinrichtung angeordnet ist. Die Distanzmesseinrichtung umfasst eine Strahlquelle, einen Detektor und ein Strahlformungssystem mit einer Sendeoptik und einer Empfangsoptik. Die Anpasseinrichtung umfasst mindestens ein Laserstrahlformungselement, das in den Strahlengang des Laserstrahls anordbar ist und das als Zerstreuungsoptik ausgebildet ist. Um den Laserstrahl an unterschiedliche Entfernungsbereiche von reflektierenden Zielobjekten anpassen zu können, sind mehrere, als Zerstreuungsoptiken ausgebildete, Laserstrahlformungselemente vorgesehen, die sich in den zerstreuenden Eigenschaften voneinander unterscheiden. In einer Weiterentwicklung umfasst die Anpasseinrichtung mindestens ein Empfangsstrahlformungselement, das in den Strahlengang des Empfangsstrahls anordbar ist und das als Streuscheibe ausgebildet ist. Mit Hilfe der Streuscheibe kann der Empfangsstrahl gedämpft werden, um ein Übersteuern des Detektors zu verhindern. Um den Empfangsstrahl an unterschiedliche Entfernungsbereiche von reflektierenden Zielobjekten anpassen zu können, sind mehrere, als Streuscheiben ausgebildete, Empfangsstrahlformungselemente vorgesehen, die sich in den lichtstreuenden Eigenschaften voneinander unterscheiden.

Die bekannte Vorrichtung zur optischen Distanzmessung zu einem reflektierenden Zielobjekt weist den Nachteil auf, dass Fremdlicht, beispielsweise in Form von direkt oder indirekt einfallendem Sonnenlicht, den Messfehler bei der Distanzmessung mit einer festen Messzeit erhöht und dadurch die Genauigkeit der Messergebnisse verschlechtern kann oder die für die Distanzmessung erforderliche Messzeit erhöht. Fremdlicht ist im Gegensatz zum Laserstrahl nicht gerichtet, sondern kann aus unterschiedlichen Richtungen einfallen. Die als Streuscheiben ausgebildeten Empfangsstrahlformungselemente dämpfen Fremdlicht sehr viel schwächer als den gerichteten Empfangsstrahl. Beim Einsatz von Flächenretroreflektoren weist die bekannte Vorrichtung zur optischen Distanzmessung aufgrund der Strahlaufweitung durch die Zerstreuungsoptik weitere Nachteile auf. Ist der Flächenretroreflektor nicht senkrecht zur optischen Achse des auftreffenden Laserstrahls angeordnet, wird die minimale Distanz nicht auf der optischen Achse des Laserstrahls gemessen und die von der Distanzmesseinrichtung gemessene Distanz weist eine Abweichung zur tatsächlichen Distanz auf. Diese Abweichung nimmt zu, je stärker der Laserstrahl von der Zerstreuungsoptik aufgeweitet wird.

### Darstellung der Erfindung

Die Aufgabe der vorliegenden Erfindung besteht in der Entwicklung einer Vorrichtung zur optischen Distanzmessung zu einem reflektierenden Zielobjekt, die für die Distanzmessung zu Einzelretroreflektoren geeignet ist und bei der Fremdlicht mit geringem apparativem Aufwand gedämpft wird. Die Vorrichtung soll außerdem für die optische Distanzmessung zu Flächenretroreflektoren geeignet sein.

Diese Aufgabe wird bei der eingangs genannten Vorrichtung zur optischen Distanzmessung zu einem reflektierenden Zielobjekt erfindungsgemäß durch die Merkmale des unabhängigen Anspruchs 1 gelöst. Vorteilhafte Weiterbildungen sind in den abhängigen Ansprüchen angegeben.

Erfindungsgemäß ist die Vorrichtung zur optischen Distanzmessung zu einem reflektierenden Zielobjekt dadurch gekennzeichnet, dass das Laserstrahlformungselement als Sendeblendenanordnung mit mindestens einer Sendeblende ausgebildet ist, wobei die mindestens eine Sendeblende einen Teilstrahl erzeugt und den Teilstrahl auf einen oder mehrere Öffnungswinkel aufweitet, die nicht kleiner als ein minimaler Grenzwinkel von 1,0 mrad sind. Ein, als Sendeblendenanordnung mit mindestens einer Sendeblende ausgebildetes, Laserstrahlformungselement, das einen Teilstrahl mit Öffnungswinkeln grösser als 1,0 mrad erzeugt, eignet sich für die optische Distanzmessung zu Einzelretroreflektoren. Der minimale Grenzwinkel von 1,0 mrad für die Öffnungswinkel stellt sicher, dass bei der Distanzmessung zu einem Einzelretroreflektor eine starke Aufweitung des Laserstrahls erfolgt. Bei Öffnungswinkeln grösser als 1,0 mrad ist eine ausreichende Aufweitung des Teilstrahls gewährleistet, so dass der Teilstrahl das Zentrum eines Einzelretroreflektors erfasst. Wenn der Teilstrahl nicht auf das Zentrum des Einzelretroreflektors trifft, besteht die Gefahr, dass der reflektierte Empfangsstrahl durch Parallelversatz die Empfangsoptik und den Detektor der Distanzmesseinrichtung verfehlt.

Eine Sendeblende ist charakterisiert durch ihren Flächeninhalt und ihre Abmessungen. Die Blendengeometrie der Sendeblende bestimmt, ob der Teilstrahl einen Öffnungswinkel oder mehrere Öffnungswinkel aufweist. Sendeblenden mit einer kreisförmigen oder quadratischen Blendengeometrie sind durch eine Abmessung (Kreisradius, Seitenlänge des Quadrats) definiert und erzeugen hinter der Sendeblende Teilstrahlen, die einen kreisförmigen Strahlquerschnitt mit einem in Umfangsrichtung konstanten Öffnungswinkel aufweisen. Sendeblenden mit einer elliptischen oder rechteckigen Blendengeometrie sind durch zwei Abmessungen definiert und erzeugen hinter der Sendeblende Teilstrahlen, die einen elliptischen Strahlquerschnitt mit einem in Umfangsrichtung variierenden Öffnungswinkel aufweisen, wobei der Öffnungswinkel des elliptischen Teilstrahls in Umfangsrichtung zwischen einem maximalen Öffnungswinkel auf der großen Halbachse und einem minimalen Öffnungswinkel auf der kleinen Halbachse des elliptischen Strahlquerschnitts variiert. Sendeblenden mit einer beliebigen Blendengeometrie erzeugen hinter der Sendeblende Teilstrahlen mit mehreren Öffnungswinkeln, die zwischen einem minimalen Öffnungswinkel und einem maximalen Öffnungswinkel liegen.

Die Öffnungswinkel des Teilstrahls, den die Sendeblende erzeugt, können über die Abmessungen der Sendeblende eingestellt werden. Der minimale Grenzwinkel von 1,0 mrad lässt sich in eine maximale Abmessung für die Sendeblende umrechnen, die nicht überschritten werden darf, wenn die Öffnungswinkel des Teilstrahls den minimalen Grenzwinkel von 1,0 mrad nicht unterschreiten sollen. Je kleiner die Abmessungen der Sendeblende sind, umso grösser sind die Öffnungswinkel des Teilstrahls im Strahlengang hinter der Sendeblende. Um bei der Distanzmessung eine gute Messperformance zu erzielen, ist es vorteilhaft in verschiedenen Entfernungsbereichen Sendeblenden mit unterschiedlichen Abmessungen und damit Öffnungswinkeln zu verwenden. Dabei gilt, dass der Öffnungswinkel des Teilstrahls mit zunehmender Entfernung abnehmen sollte, d.h. im Nahbereich sind große Öffnungswinkel vorteilhaft und in großen Entfernungen sind Öffnungswinkel im Bereich des minimalen Grenzwinkels von 1,0 mrad vorteilhaft.

In einer bevorzugten Weiterentwicklung weist die Sendeblendenanordnung mehrere Sendeblenden auf, wobei die Sendeblenden mehrere Teilstrahlen erzeugen und die Teilstrahlen jeweils auf einen oder mehrere Öffnungswinkel aufweiten, die nicht kleiner als der minimale Grenzwinkel von 1,0 mrad sind. Durch die Verwendung von mehreren Sendeblenden kann die erforderliche Genauigkeit bei der Ausrichtung des Laserstrahls auf einen Einzelretroreflektor reduziert werden. Hinter der Sendeblende weist der Teilstrahl zunächst einen kleinen Strahldurchmesser auf, der im Nahbereich von wenigen Metern hinter der Sendeblendenanordnung eine genaue Ausrichtung des Laserstrahls auf den Einzelretroreflektor erforderlich machen würde. Bei mehreren Sendeblenden addieren sich die Durchmesser der Teilstrahlen und vergrößern den Strahldurchmesser. Als Sendeblendenanordnung zur Distanzmessung an Einzelretroreflektoren eignen sich beispielsweise eine zentrale Sendeblende, die koaxial zur optischen Achse des Laserstrahls vor der Sendeblendenanordnung angeordnet ist, und eine ringförmige Verteilung weiterer Sendeblenden um die zentrale Sendeblende. Die Teilstrahlen, die die mehreren Sendeblenden erzeugen und die sich hinter der Sendeblendenanordnung zu einem Laserstrahl überlagern, sollten die gleichen Öffnungswinkel aufweisen, bevorzugt einen in Umfangsrichtung konstanten Öffnungswinkel. Die Sendeblenden weisen bevorzugt die gleiche Blendengeometrie und die gleichen Abmessungen auf.

Besonders bevorzugt sind die Sendeblenden für den Laserstrahl teildurchlässig ausgebildet. Die Strahlungsleistung des ausgesandten Laserstrahls ist für die Distanzmessung zu streuenden Zielobjekten ausgelegt. Bei streuenden Zielobjekten wird der Laserstrahl über einen großen Winkelbereich gestreut, nur ein geringer Teil der Strahlungsleistung wird von der Empfangsoptik erfasst und an den Detektor weitergeleitet. Bei der Distanzmessung zu einem Einzelretroreflektor wird der Laserstrahl am Zielobjekt reflektiert und trifft als gerichteter Empfangsstrahl auf den Detektor. Um ein Übersteuern des Detektors zu verhindern, muss die Strahlungsleistung des auf den Detektor auftreffenden Empfangsstrahls deutlich kleiner als die Strahlungsleistung des von der Strahlquelle ausgesandten Laserstrahls sein. Dabei kann die Reduzierung der Strahlungsleistung über Maßnahmen im Strahlengang des Laserstrahls und/oder über Maßnahmen im Strahlengang des Empfangsstrahls erfolgen. Die Strahlungsleistung des Laserstrahls kann über die Sendefläche der Sendeblendenanordnung und über die Durchlässigkeit der Sendeblenden angepasst werden. Die Sendefläche einer Sendeblendenanordnung ist im Allgemeinen als Summe aus den einzelnen Flächeninhalten der Sendeblenden definiert. Wenn die Sendeblenden die gleichen Abmessungen aufweisen, kann die Sendefläche auch als Produkt aus der Anzahl der Sendeblenden und dem Flächeninhalt der Sendeblenden berechnet werden. Die Durchlässigkeit der Sendeblenden beeinflusst ausschließlich die Strahlungsleistung, wohingegen Änderungen in der Sendefläche neben der Strahlungsleistung auch die Öffnungswinkel der Teilstrahlen verändern können. Für sämtliche Blendengeometrien der Sendeblenden gilt, dass der Flächeninhalt von den Abmessungen der Sendeblenden abhängt, die auch die Öffnungswinkel der Teilstrahlen bestimmen. Über die Durchlässigkeit der Sendeblenden besteht die Möglichkeit, die Strahlungsleistung anzupassen, ohne die Öffnungswinkel der Teilstrahlen zu verändern.

Die Durchlässigkeit der Sendeblenden wird beispielsweise über optische Filter eingestellt, die als Neutraldichtefilter, auch Graufilter genannt, oder als Farbfilter ausgebildet sind. Ein Farbfilter weist in einem schmalen Wellenlängenbereich einen geringen Transmissionsgrad auf, während kürzere und längere Wellenlängen nahezu vollständig durchgelassen werden. Als Neutraldichtefilter werden Glas- oder Kunststoffscheiben von optischer Güte bezeichnet, die homogen neutralgrau eingefärbt sind und eine gleichmäßige Dämpfung erzielen. Bei Neutraldichtefiltern wird ein breiter Wellenlängenbereich gedämpft, wohingegen bei Farbfiltern ein schmaler Wellenlängenbereich um die Wellenlänge der Strahlquelle, z.B. ± 15 nm, gedämpft wird. Die Strahlungsleistung des Teilstrahls bzw. der Teilstrahlen kann über den Transmissionsgrad des optischen Filters eingestellt werden. Als Transmissionsgrad ist das Verhältnis von durchgelassener Strahlungsleistung zu einfallender Strahlungsleistung definiert.

In einer bevorzugten Weiterentwicklung der erfindungsgemäßen Vorrichtung sind ein erstes Laserstrahlformungselement, das in den Strahlengang des Laserstrahls anordbar ist und als erste Sendeblendenanordnung mit mindestens einer ersten Sendeblende ausgebildet ist, und ein zweites Laserstrahlformungselement, das in den Strahlengang des Laserstrahls anordbar ist und als zweite Sendeblendenanordnung mit mindestens einer zweiten Sendeblende ausgebildet ist, vorgesehen, wobei die erste und zweite Sendeblendenanordnung voneinander verschieden sind. Die Verwendung verschiedener Sendeblendenanordnungen ermöglicht die Anpassung der erfindungsgemäßen Vorrichtung zur optischen Distanzmessung an unterschiedliche Entfernungsbereiche, in denen Einzelretroreflektoren angeordnet sind, und unterschiedliche Größen von Einzelretroreflektoren. Dabei eignen sich vor allem die Anzahl der Sendeblenden, der Flächeninhalt der Sendeblenden, die Abmessungen der Sendeblenden und/oder die Durchlässigkeit der Sendeblenden für die Anpassung der erfindungsgemäßen Vorrichtung an den Entfernungsbereich und/oder die Größe eines Einzelretroreflektors.

Besonders bevorzugt sind die erste und zweite Sendeblendenanordnung in den Abmessungen der ersten und zweiten Sendeblenden voneinander verschieden. Über die Abmessungen der Sendeblenden können die Öffnungswinkel der Teilstrahlen angepasst werden. Die Verwendung verschiedener Abmessungen ermöglicht die Anpassung der Sendeblendenanordnungen an unterschiedliche Entfernungsbereiche und unterschiedliche Größen von Einzelretroreflektoren. Je grösser die Entfernung zum Zielobjekt ist, umso kleiner sollte der Öffnungswinkel der Teilstrahlen sein, wobei die Öffnungswinkel der Teilstrahlen auf jeden Fall grösser als der minimale Grenzwinkel von 1,0 mrad sind.

Besonders bevorzugt sind die erste und zweite Sendeblendenanordnung in der Anzahl der Sendeblenden, im Flächeninhalt der Sendeblenden und/oder in der Durchlässigkeit der Sendeblenden voneinander verschieden. Die bei einem Einzelretroreflektor erforderliche Reduzierung der Strahlungsleistung des Empfangsstrahls kann über die Sendefläche der Sendeblendenanordnung und über die Durchlässigkeit der Sendeblenden erzielt werden. Je kleiner das Verhältnis der Sendefläche zur Querschnittsfläche des Laserstrahls unmittelbar vor der Sendeblendenanordnung ist, umso kleiner ist der transmittierte Anteil des Laserstrahls. Zusätzlich zur Sendefläche kann die Strahlungsleistung des Laserstrahls über die Durchlässigkeit der Sendeblenden angepasst werden. Dazu können die Sendeblenden mit einem optischen Filter versehen werden, wobei die Strahlungsleistung des Laserstrahls über den Transmissionsgrad des optischen Filters eingestellt werden kann.

In einer bevorzugten Weiterentwicklung der erfindungsgemäßen Vorrichtung ist ein weiteres Laserstrahlformungselement vorgesehen, das in den Strahlengang des Laserstrahls anordbar ist und das als Formungsblende ausgebildet ist, wobei die Formungsblende den Laserstrahl in einen geformten Laserstrahl mit einem oder mehreren Öffnungswinkeln umformt und die Öffnungswinkel kleiner als ein maximaler Grenzwinkel von 0,3 mrad sind. Ein, als Formungsblende ausgebildetes, Laserstrahlformungselement, das einen geformten Laserstrahl mit Öffnungswinkeln kleiner als 0,3 mrad erzeugt, eignet sich für die optische Distanzmessung zu Flächenretroreflektoren. Der maximale Grenzwinkel von 0,3 mrad stellt sicher, dass bei der Distanzmessung zu Flächenretroreflektoren eine Homogenisierung des Laserstrahls erfolgt, wohingegen bei der Distanzmessung zu Einzelretroreflektoren eine starke Aufweitung des Laserstrahls erfolgt, die durch die Definition des minimalen Grenzwinkels von 1,0 mrad sichergestellt wird. Der Öffnungswinkel des geformten Laserstrahls kann über die Abmessungen der Formungsblende eingestellt werden. Dabei gilt, je grösser die Abmessungen der Formungsblende sind, umso kleiner ist der Öffnungswinkel des geformten Laserstrahls.

Eine Formungsblende ist charakterisiert durch ihren Flächeninhalt und ihre Abmessungen. Die Blendengeometrie der Formungsblende bestimmt, ob der geformte Laserstrahl einen Öffnungswinkel oder mehrere Öffnungswinkel aufweist. Formungsblenden mit einer kreisförmigen oder quadratischen Blendengeometrie sind durch eine Abmessung (Kreisradius, Seitenlänge des Quadrats) definiert und erzeugen Laserstrahlen, die einen kreisförmigen Strahlquerschnitt mit einem in Umfangsrichtung konstanten Öffnungswinkel aufweisen. Formungsblenden mit einer elliptischen oder rechteckigen Blendengeometrie sind durch zwei Abmessungen definiert und erzeugen Laserstrahl, die einen elliptischen Strahlquerschnitt mit einem in Umfangsrichtung variierenden Öffnungswinkel aufweisen, wobei der Öffnungswinkel des elliptischen Laserstrahls in Umfangsrichtung zwischen einem maximalen Öffnungswinkel auf der großen Halbachse und einem minimalen Öffnungswinkel auf der kleinen Halbachse des elliptischen Strahlquerschnitts variiert.

Bei erfindungsgemäßen Vorrichtungen unterscheiden sich die Sendeblenden und Formungsblenden durch die Abmessungen. Die Sendeblende wird bei der Distanzmessung zu Einzelretroreflektoren eingesetzt und die Formungsblende bei der Distanzmessung zu Flächenretroreflektoren. Für die Distanzmessung zu Einzelretroreflektoren ist der minimale Grenzwinkel von 1,0 mrad definiert und für die Distanzmessung zu Flächenretroreflektoren der maximale Grenzwinkel von 0,3 mrad. Der minimale Grenzwinkel von 1,0 mrad lässt sich in eine maximale Abmessung für die Sendeblende umrechnen, die von der Sendeblende nicht überschritten werden darf, und der maximale Grenzwinkel von 0,3 mrad lässt sich in eine minimale Abmessung für die Formungsblende umrechnen, die von der Formungsblende nicht unterschritten werden darf.

Besonders bevorzugt ist die Formungsblende für den Laserstrahl teildurchlässig ausgebildet. Die Strahlungsleistung des ausgesandten Laserstrahls ist für die Distanzmessung zu streuenden Zielobjekten ausgelegt, bei denen nur ein geringer Teil der Strahlungsleistung von der Empfangsoptik erfasst und an den Detektor weitergeleitet wird. Bei der Distanzmessung zu einem Flächenretroreflektor wird der Laserstrahl am Zielobjekt reflektiert und trifft als gerichteter Empfangsstrahl auf den Detektor. Um ein Übersteuern des Detektors zu verhindern, muss die Strahlungsleistung des auf den Detektor auftreffenden Empfangsstrahls deutlich kleiner als die Strahlungsleistung des von der Strahlquelle ausgesandten Laserstrahls sein. Die Strahlungsleistung des Laserstrahls kann über den Flächeninhalt der Formungsblende und über die Durchlässigkeit der Formungsblende angepasst werden. Die Durchlässigkeit der Formungsblende beeinflusst ausschließlich die Strahlungsleistung, wohingegen der Flächeninhalt der Formungsblende, der von den Abmessungen abhängt, die Strahlungsleistung und die Öffnungswinkel verändert. Über die Durchlässigkeit der Formungsblende besteht die Möglichkeit, die Strahlungsleistung anzupassen, ohne die Öffnungswinkel des Laserstrahls zu verändern. Die Durchlässigkeit der Formungsblende wird beispielsweise über optische Filter eingestellt, die als Neutraldichtefilter oder als Farbfilter ausgebildet sind. Die Strahlungsleistung des Laserstrahls kann über den Transmissionsgrad des optischen Filters eingestellt werden.

Besonders bevorzugt sind eine erste Formungsblende, die in den Strahlengang des Laserstrahls anordbar ist, und eine zweite Formungsblende, die in den Strahlengang des Laserstrahls anordbar ist, vorgesehen, wobei die erste und zweite Formungsblende in den Abmessungen der Formungsblenden, im Flächeninhalt der Formungsblenden und/oder in der Durchlässigkeit der Formungsblenden voneinander verschieden sind. Die Verwendung verschiedener Formungsblenden ermöglicht die Anpassung der erfindungsgemäßen Vorrichtung an unterschiedliche Entfernungsbereiche, in denen ein Flächenretroreflektor angeordnet ist, und an die Größe von Flächenretroreflektoren. Über die Abmessungen der Formungsblende können die Öffnungswinkel des geformten Laserstrahls eingestellt werden. Je grösser die Abmessungen der Formungsblende sind, umso kleiner sind die Öffnungswinkel des geformten Laserstrahls und je grösser die Entfernung der Distanzmesseinrichtung zum Zielobjekt ist, umso kleiner sollte der Öffnungswinkel des Laserstrahls sein.

In einer bevorzugten Weiterentwicklung der erfindungsgemäßen Vorrichtung ist ein Empfangsstrahlformungselement vorgesehen, das in den Strahlengang des Empfangsstrahls anordbar ist und das als Empfangsblendenanordnung mit mindestens einer Empfangsblende ausgebildet ist. Die bei reflektierenden Zielobjekten (Einzelretroreflektor oder Flächenretroreflektor) erforderliche Reduzierung der Strahlungsleistung des auftreffenden Empfangsstrahls kann über die Empfangsblendenanordnung mit mindestens einer Empfangsblende erfolgen. Die Strahlungsleistung des Empfangsstrahls kann über die Empfangsfläche der Empfangsblendenanordnung und die Durchlässigkeit der Empfangsblenden eingestellt werden. Die Empfangsfläche einer Empfangsblendenanordnung ist im Allgemeinen als Summe aus den einzelnen Flächeninhalten der Empfangsblenden definiert. Wenn die Empfangsblenden die gleichen Abmessungen aufweisen, kann die Empfangsfläche auch als Produkt aus der Anzahl der Empfangsblenden und dem Flächeninhalt der Empfangsblenden berechnet werden. Je kleiner das Verhältnis der Empfangsfläche zur Querschnittsfläche des Empfangsstrahls unmittelbar vor der Empfangsblendenanordnung ist, umso kleiner ist die Strahlungsleistung des Empfangsstrahls. Die Dämpfung des Empfangsstrahls über eine Begrenzung der Empfangsfläche ist unabhängig von der Wellenlänge der Strahlquelle, so dass auch Fremdlicht, beispielsweise in Form von Sonnenlicht mit einem breiten Wellenlängenspektrum, gedämpft wird. Die Dämpfung von Fremdlicht erfolgt ohne zusätzlichen apparativen Aufwand.

Besonders bevorzugt weist die Empfangsblendenanordnung mehrere Empfangsblenden auf, die voneinander beabstandet sind. Die Verwendung einer Empfangsblendenanordnung mit mehreren Empfangsblenden, die über den Strahlquerschnitt des Empfangsstrahls verteilt sind, führt zu einer Homogenisierung des Empfangsstrahls. Eine Homogenisierung eignet sich vor allem für Empfangsstrahlen, die eine inhomogene Verteilung über den Strahlquerschnitt aufweisen. Über die Anzahl der Empfangsblenden und den Flächeninhalt der Empfangsblenden kann die Empfangsfläche angepasst werden.

Besonders bevorzugt sind die Empfangsblenden für den Empfangsstrahl teildurchlässig ausgebildet. Alternativ zur Empfangsfläche oder zusätzlich zur Empfangsfläche kann die Strahlungsleistung des Empfangsstrahls über die Durchlässigkeit der Empfangsblenden angepasst werden. Dabei sind die Empfangsblenden besonders bevorzugt mit einem optischen Filter versehen, wobei die Strahlungsleistung des Empfangsstrahls über den Transmissionsgrad des optischen Filters eingestellt werden kann. Als optische Filter für die teildurchlässigen Empfangsblenden eignen sich Neutraldichtefilter, die ein breites Wellenlängenspektrum dämpfen und neben dem Empfangsstrahl auch Fremdlicht dämpfen. Die Dämpfung von Fremdlicht erfolgt bei Verwendung von Neutraldichtefiltern ohne zusätzlichen apparativen Aufwand.

In einer bevorzugten Weiterentwicklung sind ein erstes Empfangsstrahlformungselement, das in den Strahlengang des Empfangsstrahls anordbar ist und als erste Empfangsblendenanordnung mit mindestens einer ersten Empfangsblende ausgebildet ist, und ein zweites Empfangsstrahlformungselement, das in den Strahlengang des Empfangsstrahls anordbar ist und als zweite Empfangsblendenanordnung mit mindestens einer zweiten Empfangsblende ausgebildet ist, vorgesehen, wobei die erste und zweite Empfangsblendenanordnung voneinander verschieden sind. Die Verwendung verschiedener Empfangsblendenanordnungen ermöglicht die Anpassung der erfindungsgemäßen Vorrichtung an unterschiedliche Entfernungsbereiche, in denen ein reflektierendes Zielobjekt angeordnet ist, an unterschiedliche Typen von reflektierenden Zielobjekten (Einzelretroreflektor oder Flächenretroreflektor) und an unterschiedliche Größen von reflektierenden Zielobjekten. Dabei eignen sich vor allem die Anzahl der Empfangsblenden, der Flächeninhalt der Empfangsblenden und/oder die Durchlässigkeit der Empfangsblenden für die Anpassung der erfindungsgemäßen Vorrichtung an den Entfernungsbereich, den Typ und die Größe des reflektierenden Zielobjektes.

Besonders bevorzugt sind die erste und zweite Empfangsblendenanordnung in der Anzahl der Empfangsblenden, im Flächeninhalt der Empfangsblenden und/oder in der Durchlässigkeit der Empfangsblenden voneinander verschieden. Die Strahlungsleistung des Empfangsstrahls kann über die Empfangsfläche der Empfangsblendenanordnung und über die Durchlässigkeit der Empfangsblenden angepasst werden. Dabei wird die Empfangsfläche über die Anzahl der Empfangsblenden und/oder den Flächeninhalt der Empfangsblenden eingestellt. Je kleiner das Verhältnis der Empfangsfläche zur Querschnittsfläche des Empfangsstrahls unmittelbar vor der Empfangsblendenanordnung ist, umso kleiner ist die Strahlungsleistung des Empfangsstrahls. Mit zunehmendem Abstand eines reflektierenden Zielobjektes von der Distanzmesseinrichtung sollte die Empfangsfläche vergrößert werden. Alternativ oder zusätzlich zur Empfangsfläche der Empfangsblendenanordnung kann die Strahlungsleistung des Empfangsstrahls über die Durchlässigkeit der Empfangsblenden angepasst werden. Dabei sind die Empfangsblenden besonders bevorzugt mit einem Neutraldichtefilter versehen, wobei die Durchlässigkeit der Empfangsblenden über den Transmissionsgrad des Neutraldichtefilters eingestellt wird. Die Verwendung von Neutraldichtefiltern zur Dämpfung des Empfangsstrahls hat den Vorteil, dass neben dem Empfangsstrahl auch Fremdlicht gedämpft wird. Die Dämpfung von Fremdlicht erfolgt bei der Verwendung von Neutraldichtefiltern ohne zusätzlichen apparativen Aufwand.

In einer ersten bevorzugten Weiterentwicklung der erfindungsgemäßen Vorrichtung sind ein, als Sendeblendenanordnung ausgebildetes, Laserstrahlformungselement und ein, als Empfangsblendenanordnung ausgebildetes, Empfangsstrahlformungselement auf einem ersten Formungselement angeordnet, wobei das erste Formungselement in den Strahlengang des Laserstrahls und den Strahlengang des Empfangsstrahls anordbar ist. Die Anordnung einer Sendeblendenanordnung und einer Empfangsblendenanordnung auf einem ersten Formungselement ist für die Distanzmessung zu Einzelretroreflektoren geeignet und reduziert den Aufwand und den Platzbedarf, da die Sende- und Empfangsblendenanordnungen gemeinsam in den Strahlengang des Laserstrahls und des Empfangsstrahls angeordnet werden. Die Sende- und Empfangsblendenanordnungen können koaxial zueinander oder nebeneinander angeordnet sein, wobei die geeignete Anordnung der Sende- und Empfangsblendenanordnungen durch die Anordnung des Laser- und Empfangsstrahls festgelegt ist.

In einer zweiten bevorzugten Weiterentwicklung der erfindungsgemäßen Vorrichtung sind ein, als Formungsblende ausgebildetes, Laserstrahlformungselement und ein, als Empfangsblendenanordnung ausgebildetes, Empfangsstrahlformungselement auf einem zweiten Formungselement angeordnet, wobei das zweite Formungselement in den Strahlengang des Laserstrahls und den Strahlengang des Empfangsstrahls anordbar ist. Die Anordnung einer Formungsblende und einer Empfangsblendenanordnung auf einem zweiten Formungselement ist für die Distanzmessung zu Flächenretroreflektoren geeignet und reduziert den Aufwand und den Platzbedarf, da die Formungsblende und die Empfangsblendenanordnung gemeinsam in den Strahlengang des Laserstrahls und des Empfangsstrahls angeordnet werden. Die Formungsblende und Empfangsblendenanordnung können koaxial zueinander oder nebeneinander angeordnet sein, wobei die geeignete Anordnung der Formungsblende und Empfangsblendenanordnung durch die Anordnung des Laser- und Empfangsstrahls festgelegt ist.

Besonders bevorzugt sind mindestens ein erstes Formungselement und mindestens ein zweites Formungselement vorgesehen. Eine erfindungsgemäße Vorrichtung, die mindestens ein erstes Formungselement und mindestens ein zweites Formungselement aufweist, eignet sich für die optische Distanzmessung zu Einzelretroreflektoren und Flächenretroreflektoren. Das erste Formungselement ist für die Distanzmessung zu Einzelretroreflektoren und das zweite Formungselement für die Distanzmessung zu Flächenretroreflektoren ausgelegt.

Besonders bevorzugt sind mehrere erste Formungselemente und/oder mehrere zweite Formungselemente vorgesehen. Bei einer erfindungsgemäßen Vorrichtung, die mehrere erste Formungselemente, mehrere zweite Formungselemente oder mehrere erste und zweite Formungselemente aufweist, können die strahlformenden Eigenschaften der Laser- und Empfangsstrahlformungselemente an unterschiedliche Entfernungsbereiche, in denen ein Einzelretroreflektor oder ein Flächenretroreflektor angeordnet ist, angepasst werden. Die ersten Formungselemente sind für die optische Distanzmessung zu Einzelretroreflektoren und die zweiten Formungselemente für die optische Distanzmessung zu Flächenretroreflektoren vorgesehen.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIGN. 1A, B: eine erfindungsgemäße Vorrichtung zur optischen Distanzmessung zu einem reflektierenden Zielobjekt bestehend aus einer Distanzmesseinrichtung und einer motorisch verstellbaren Anpasseinrichtung mit Laser- und Empfangsstrahlformungselementen;
- FIGN. 2A, B: die optische Distanzmessung zu einem Einzelretroreflektor mit Hilfe der in FIG. 1 dargestellten Vorrichtung, die eine Sendeblendenanordnung mit einer Sendeblende (FIG. 2A) oder eine Sendeblendenanordnung mit mehreren Sendeblende (FIG. 2B) umfasst;
- FIG. 3: die optische Distanzmessung zu einem Flächenretroreflektor mit Hilfe der in FIG. 1 dargestellten Vorrichtung;
- FIGN. 4A, B: eine erste und zweite Ausführungsform eines ersten Formungselementes mit Laser- und Empfangsstrahlformungselementen für die optische Distanzmessung zu Einzelretroreflektoren in unterschiedlichen Entfernungsbereichen;
- FIGN. 5A, B: eine erste und zweite Ausführungsform eines zweiten Formungselementes mit Laser- und Empfangsstrahlformungselementen für die optische Distanzmessung zu Flächenretroreflektoren in unterschiedlichen Entfernungsbereichen;
- FIG. 6: eine erste Ausführungsform einer Anpasseinrichtung mit zwei ersten Formungselementen, die zur optischen Distanzmessung an Einzelretroreflektoren ausgebildet sind, und drei zweiten Formungselementen, die zur optischen Distanzmessung an Flächenretroreflektoren ausgebildet sind; und
- FIGN. 7A, B: eine zweite Ausführungsform einer Anpasseinrichtung mit mehreren Laser- und Empfangsstrahlformungselementen, die in einem ersten Drehrad angeordnet sind, und mehreren Dämpfungselementen, die in einem zweiten Drehrad angeordnet sind.

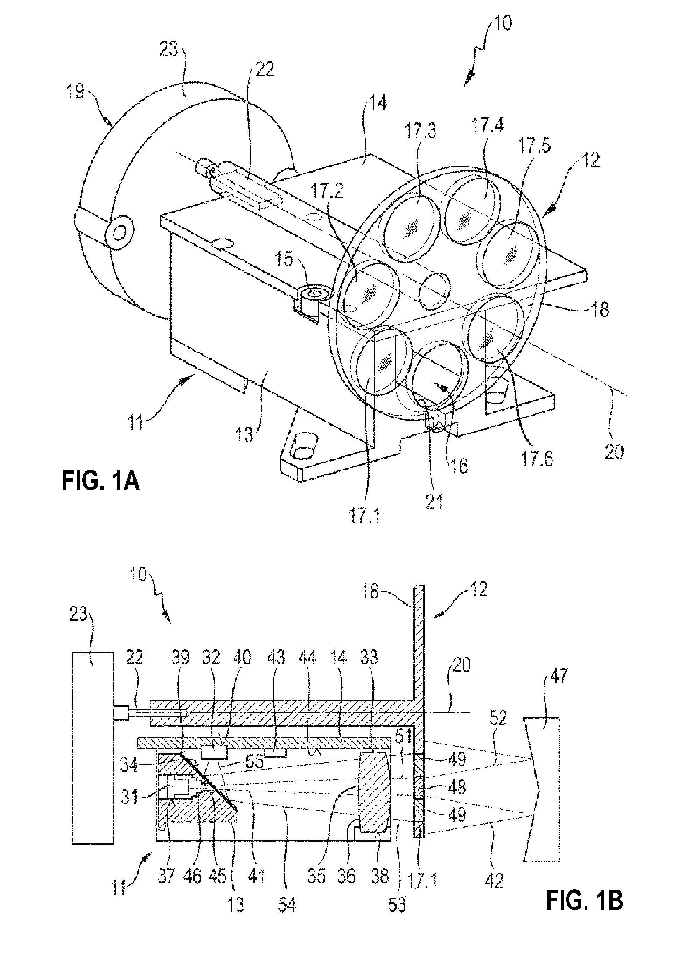

**FIG. 1A** zeigt eine erfindungsgemäße Vorrichtung **10** zur optischen Distanzmessung zu einem Zielobjekt bestehend aus einer Distanzmesseinrichtung **11** und einer motorisch verstellbaren Anpasseinrichtung **12**, die außerhalb der Distanzmesseinrichtung 11 angeordnet ist. Bei Zielobjekten wird zwischen reflektierenden Zielobjekten, bei denen ein auftreffender Laserstrahl überwiegend reflektiert wird, und streuenden Zielobjekten, bei denen ein auftreffender Laserstrahl überwiegend gestreut wird, unterschieden.

Bei den reflektierenden Zielobjekten wird zusätzlich zwischen Einzelretroreflektoren und Flächenretroreflektoren unterschieden. Als Einzelretroreflektoren sind reflektierende Zielobjekte definiert, die aus einem Tripelprisma bestehen, wobei die Abmessungen des Prismas grösser als die typischen Laserstrahldurchmesser sind und ein auftreffender Laserstrahl eine Fläche des Tripelprismas erfasst. Beispiele für Einzelretroreflektoren sind Tripelprismen mit Durchmessern von 25 mm oder 50 mm. Als Flächenretroreflektoren sind reflektierende Zielobjekte definiert, die aus einer Mehrzahl von Prismen bestehen, die in einer ebenen Fläche nebeneinander angeordnet sind, wobei die Abmessungen der Prismen kleiner als die typischen Laserstrahldurchmesser sind und ein auftreffender Laserstrahl mehrere Prismen erfasst. Beispiele für Flächenretroreflektoren sind Reflexionsfolien und Katzenaugen. Katzenaugen sind im Rahmen der vorliegenden Anmeldung Flächenretroreflektoren, bei denen das Verhältnis der Größe der Prismen zum Laserstrahldurchmesser zwischen 0,1 und 1,0 liegt, und Reflexionsfolien sind Flächenretroreflektoren, bei denen das Verhältnis der Größe der Prismen zum Laserstrahldurchmesser kleiner als 0,1 ist.

Die Distanzmesseinrichtung 11 umfasst einen Optikträger **13** und eine Leiterplatte **14**, die über eine Verbindungseinrichtung **15** mit dem Optikträger 13 verbunden ist. In der Distanzmesseinrichtung 11 wird ein Laserstrahl erzeugt, der über eine Auskoppelöffnung **16** im Optikträger 13 aus der Distanzmesseinrichtung 11 austritt und auf die Anpasseinrichtung 12 trifft. Mit Hilfe der Anpasseinrichtung 12 wird der Laserstrahl an die Eigenschaften des Zielobjektes und den Entfernungsbereich zum Zielobjekt angepasst. Die Anpasseinrichtung 12 umfasst im Ausführungsbeispiel sechs verschiedene Formungselemente **17.1-17.6**, die in einem Drehrad **18** befestigt sind und mittels einer motorischen Antriebseinrichtung **19** um eine Drehachse **20** drehbar sind.

Die Formungselemente 17.1-17.6 der Anpasseinrichtung 12 weisen jeweils ein Laserstrahlformungselement zur Strahlformung des Laserstrahls und ein Empfangsstrahlformungselement zur Strahlformung des Empfangsstrahls auf; die Formungselemente 17.1-17.6 unterscheiden sich in ihren Beugungseigenschaften und/oder Dämpfungseigenschaften und sind zur Distanzmessung von reflektierenden Zielobjekten in verschiedenen Entfernungsbereichen vorgesehen. Das Drehrad 18 weist neben den sechs Formungselementen 17.1-17.6 eine weitere Aufnahme **21** auf, in die kein Formungselement eingesetzt ist und keine Beugung und/oder Dämpfung des Laserstrahls und/oder des Empfangsstrahls erfolgt.

Das Drehrad 18 ist drehfest mit einem Achselement **22** verbunden, das von einem Antriebsmotor **23** um die Drehachse 20 drehbar ist; mittels einer Winkelsensoreinrichtung wird der Drehwinkel des Antriebsmotors 23 erfasst. Der Antrieb des Drehrades 18 um die Drehachse 20 kann alternativ über eine manuelle Dreheinrichtung erfolgen. Das Drehrad 18 kann durch eine Drehung um die Drehachse 20 in sieben Winkelpositionen angeordnet werden. In sechs Winkelpositionen ist eines der Formungselemente 17.1-17.6 im Laserstrahl angeordnet und in der siebten Winkelposition sind sämtliche Formungselemente 17.1-17.6 außerhalb des Laserstrahls und außerhalb des Empfangsstrahls angeordnet. Die siebte Winkelposition ist zur Distanzmessung auf streuende Zielobjekte vorgesehen.

**FIG. 1** **B** zeigt den Aufbau der Distanzmesseinrichtung 11 und der motorisch verstellbaren Anpasseinrichtung 12 der erfindungsgemäßen Vorrichtung 10 zur optischen Distanzmessung der FIG. 1A im Detail.

Die Distanzmesseinrichtung 11 umfasst eine als Strahlquelle **31** ausgebildete erste elektro-optische Komponente, eine als Detektor **32** ausgebildete zweite elektro-optische Komponente, ein Strahlformungssystem **33**, eine Strahlteilungsoptik **34**, den Optikträger 13 und die Leiterplatte 14. Das Strahlformungssystem 33 umfasst eine Sendeoptik **35** zur Strahlformung des Laserstrahls und eine Empfangsoptik **36** zur Strahlformung des Empfangsstrahls, die in eine gemeinsame Strahlformungsoptik 33 integriert sind. Die Strahlquelle 31, die Strahlformungsoptik 33 und die Strahlteilungsoptik 34 sind am Optikträger 13 befestigt und der Detektor 32 ist an der Leiterplatte 14 befestigt. Der Optikträger 13 weist eine erste Aufnahme **37** für die Strahlquelle 31, eine zweite Aufnahme **38** für die Strahlformungsoptik 33 und eine dritte Aufnahme **39** für die Strahlteilungsoptik 34 auf. Der Detektor 32 ist auf der Leiterplatte 14 in einer weiteren Aufnahme **40** befestigt.

Die Strahlquelle 31 ist als Laserdiode ausgebildet, die einen sichtbaren oder infraroten Laserstrahl **41** erzeugt. Der Detektor 32 ist als Fotodiode ausgebildet, die einen vom Zielobjekt reflektierten und/oder gestreuten Empfangsstrahl **42** empfängt. Die Strahlteilungsoptik 34 trennt den Laserstrahl vom koaxial verlaufenden Empfangsstrahl, sie ist im Strahlengang des Laserstrahls zwischen der Strahlquelle 31 und der Strahlformungsoptik 33 und im Strahlengang des Empfangsstrahls zwischen der Strahlformungsoptik 33 und dem Detektor 32 angeordnet. Die Strahlteilungsoptik 41 kann beispielsweise als Polarisationsstrahlteiler, als Lochspiegel oder sonstiges strahlteilendes optisches Element ausgebildet sein. Eine Steuer- und Auswerteeinrichtung **43** ist mit der Strahlquelle 31 und dem Detektor 32 verbunden und bestimmt aus einer Zeitdifferenz zwischen einem Referenzstrahl und dem Empfangsstrahl die Distanz zum Zielobjekt.

Der Detektor 32 ist auf einer dem Optikträger 13 zugewandten Vorderseite **44** der Leiterplatte 14 angeordnet und mit der Leiterplatte 14 fest über eine Lötverbindung verbunden, wobei der Detektor 32 beispielsweise bei der Herstellung der Leiterplatte 14 automatisch bestückt und verlötet werden kann. Der Detektor 32 ist ausschließlich von der Leiterplatte 14 mechanisch gehalten, es sind keine Verbindungsmittel vorhanden, die den Detektor 32 unmittelbar mit dem Optikträger 13 verbinden. Der Optikträger 13 ist an einer, dem Detektor 32 zugewandten, Seite offen ausgebildet und mit einer Kontaktfläche über die Verbindungseinrichtung 15 mit der Leiterplatte 14 verbunden. Die Verbindungseinrichtung 15 ist während der Justierung der Distanzmesseinrichtung 11 lösbar ausgebildet.

Im Strahlengang des Laserstrahls 41 ist zwischen der Strahlquelle 31 und der Strahlteilungsoptik 33 eine Blende **45** angeordnet, die in den monolithischen Optikträger 13 integriert ist. Die Blende 45 dient dazu, den Öffnungswinkel der Strahlquelle 31 zu begrenzen und die Geometrie des Laserstrahls 41 an die Strahlteilungsoptik 34 und die Strahlformungsoptik 33 anzupassen. Zwischen der Strahlquelle 31 und der Blende 45 ist eine Lichtfalle **46** angeordnet, die wie die Blende 45 in den monolithischen Optikträger 13 integriert ist. Die Lichtfalle 46 dient dazu, auftreffendes Licht zu absorbieren und unerwünschte Reflektionen zu verhindern. Dazu ist die Lichtfalle 46 auf der Innenseite mit einer reflexarmen, absorbierenden Beschichtung versehen. Durch die Blende 45 und die Lichtfalle 46 werden optisches und elektrisches Übersprechen von der Strahlquelle 31 zum Detektor 32 sowie störende Artefakte im Laserstrahl reduziert.

Als Zielobjekt wird im Ausführungsbeispiel der FIG. 1B ein als Einzelretroreflektor **47** ausgebildetes reflektierendes Zielobjekt verwendet, das sich in kurzer Entfernung zur Distanzmesseinrichtung 11 befindet. Das erste Formungselement 17.1 befindet sich im Strahlengang des Laserstrahls 41 und des Empfangsstrahls 42. Das erste Formungselement 17.1 weist ein Laserstrahlformungselement **48** für den Laserstrahl 41 und ein Empfangsstrahlformungselement **49** für den Empfangsstrahl 42 auf.

Die Strahlquelle 31 sendet den Laserstrahl 41 aus, der auf die Strahlteilungsoptik 34 gerichtet ist. An der Strahlteilungsoptik 34 wird ein größtmöglicher Teil des Laserstrahls 41 transmittiert und trifft auf die Sendeoptik 35, an der eine erste Strahlformung erfolgt. Die erste Sendeoptik 35 ist als Kollimationslinse ausgebildet, die den Laserstrahl 41 kollimiert und als kollimierten Laserstrahl **51** auf das Laserstrahlformungselement 48 richtet. Die optischen Eigenschaften der Kollimationslinse 35 sind an die Distanzmessung von streuenden Zielobjekten angepasst. Der kollimierte Laserstrahl 51 trifft auf das Laserstrahlformungselement 48, an dem die Strahlformung und Dämpfung des kollimierten Laserstrahls 51 erfolgt. Der geformte Laserstrahl **52** trifft auf das reflektierende Zielobjekt 47.

Der am Zielobjekt 47 reflektierte Empfangsstrahl 42 trifft auf das Empfangsstrahlformungselement 49, das den Empfangsstrahl 42 beugt, dämpft und als geformten Empfangsstrahl **53** auf die Empfangsoptik 36 richtet. An der Empfangsoptik 36 erfolgt eine weitere Strahlformung des geformten Empfangsstrahls 53. Der zweifach geformte Empfangsstrahl **54** wird auf die Strahlteilungsoptik 34 gerichtet und an der Strahlteilungsoptik 34 umgelenkt. Der umgelenkte Empfangsstrahl **55** trifft auf den Detektor 32. Die Strahlteilungsoptik 34 sorgt dafür, dass die optische Achse des umgelenkten Empfangsstrahls 55 und die optische Achse des ausgesandten Laserstrahls 41 voneinander verschieden sind.

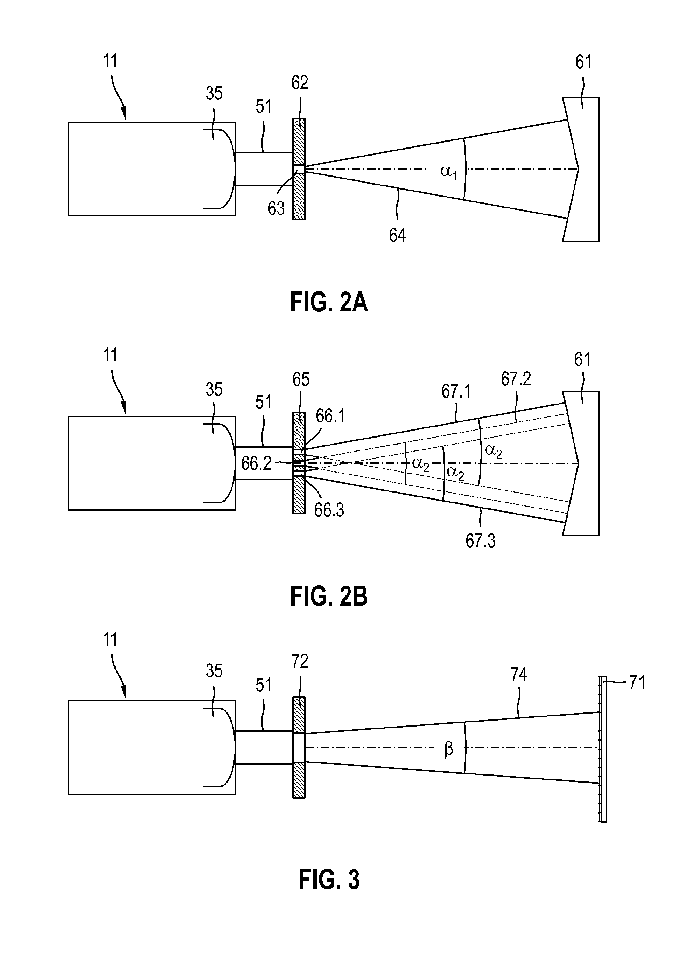

**FIGN. 2A****, B** zeigen schematisch die optische Distanzmessung zu einem Einzelretroreflektor **61** mit Hilfe der in FIG. 1 dargestellten Vorrichtung 10. Die Anpassung des Laserstrahls an den Einzelretroreflektor 61 erfolgt mittels eines Laserstrahlformungselementes, das als Sendeblendenanordnung mit einer Sendeblende (FIG. 2A) oder als Sendeblendenanordnung mit mehreren Sendeblenden (FIG. 2B) ausgebildet ist.

Die Distanzmesseinrichtung 11 erzeugt mit Hilfe der Sendeoptik 35 den kollimierten Laserstrahl 51. Im Strahlengang des kollimierten Laserstrahls 51 ist ein erstes Laserstrahlformungselement **62** angeordnet, das für die Distanzmessung zu Einzelretroreflektoren ausgelegt ist. Bei Einzelretroreflektoren sollte das Zentrum des Zielobjektes vom Laserstrahl getroffen werden, damit der reflektierte Empfangsstrahl in jedem Fall auf die Empfangsoptik 36 auftrifft und vom Detektor 32 erfasst wird. Trifft der Laserstrahl nicht auf das Zentrum des Einzelretroreflektors, kann der reflektierte Empfangsstrahl durch Parallelversatz die Empfangsoptik 36 verfehlen. Um die Genauigkeit zu reduzieren, mit der der Laserstrahl auf den Einzelretroreflektor 61 ausgerichtet werden muss, wird der Laserstrahl aufgeweitet.

Das erste Laserstrahlformungselement ist als erste Sendeblendenanordnung 62 mit einer ersten Sendeblende **63** ausgebildet. Die erste Sendeblende 63 weist eine kreisförmige Blendengeometrie mit einem Kreisradius auf. Die erste Sendeblende 63 erzeugt einen Teilstrahl **64** und weitet den Teilstrahl 64 auf einen ersten Öffnungswinkel α₁ auf, der grösser als ein minimaler Grenzwinkel αₘᵢₙ von 1,0 mrad ist. Der erste Öffnungswinkel α₁ des Teilstrahls 64 kann über den Kreisradius der ersten Sendeblende 63 eingestellt werden; je kleiner der Kreisradius der ersten Sendeblende 63 ist, umso grösser ist der erste Öffnungswinkel α₁ des Teilstrahls. Die erste Sendeblende 63 führt ausserdem dazu, dass die Strahlungsleistung des Laserstrahls stark reduziert wird.

Eine Sendeblende ist charakterisiert durch ihren Flächeninhalt und ihre Abmessungen. Der minimale Grenzwinkel αₘᵢₙ von 1,0 mrad lässt sich in eine maximale Abmessung für die Sendeblende umrechnen, die von der Sendeblende nicht unterschritten werden darf. Die Blendengeometrie der Sendeblende bestimmt, ob der Teilstrahl einen Öffnungswinkel oder mehrere Öffnungswinkel aufweist. Sendeblenden mit einer kreisförmigen oder quadratischen Blendengeometrie sind durch eine Abmessung (Kreisradius, Seitenlänge des Quadrats) definiert und erzeugen hinter der Sendeblende Teilstrahlen, die einen kreisförmigen Strahlquerschnitt mit einem in Umfangsrichtung konstanten Öffnungswinkel aufweisen. Sendeblenden mit einer elliptischen oder rechteckigen Blendengeometrie sind durch zwei Abmessungen definiert und erzeugen hinter der Sendeblende Teilstrahlen, die einen elliptischen Strahlquerschnitt mit einem in Umfangsrichtung variierenden Öffnungswinkel aufweisen, wobei der Öffnungswinkel des elliptischen Teilstrahls in Umfangsrichtung zwischen einem maximalen Öffnungswinkel auf der großen Halbachse und einem minimalen Öffnungswinkel auf der kleinen Halbachse des elliptischen Strahlquerschnitts variiert. Sendeblenden mit einer beliebigen Blendengeometrie erzeugen hinter der Sendeblende Teilstrahlen mit mehreren Öffnungswinkeln, die zwischen einem minimalen Öffnungswinkel und einem maximalen Öffnungswinkel liegen.

Hinter der ersten Sendeblende 63 weist der Teilstrahl 64 zunächst einen kleinen Strahldurchmesser auf, was im Nahbereich eine genaue Ausrichtung des Teilstrahls 64 auf den Einzelretroreflektor 61 erforderlich machen würde. Um die erforderliche Genauigkeit zu reduzieren, mit der der Teilstrahl 64 auf den Einzelretroreflektor 61 ausgerichtet werden muss, kann das in FIG. 2B dargestellte zweite Laserstrahlformungselement **65** eingesetzt werden. Das zweite Laserstrahlformungselement ist als zweite Sendeblendenanordnung 65 mit drei zweiten Sendeblenden **66.1, 66.2, 66.3** ausgebildet. Die zweiten Sendeblenden 66 erzeugen jeweils einen Teilstrahl **67.1, 67.2, 67.3** und weiten die Teilstrahlen 67.1-67.3 auf einen zweiten Öffnungswinkel α₂ auf, der grösser als der minimale Grenzwinkel αₘᵢₙ von 1,0 mrad ist. Als Anordnung der zweiten Sendeblenden 66.1-66.3 eignen sich beispielsweise eine zentrale zweite Sendeblende, die koaxial zur optischen Achse des kollimierten Laserstrahls 51 angeordnet ist, und eine ringförmige Verteilung weiterer zweiter Sendeblenden um die zentrale zweite Sendeblende. Der zweite Öffnungswinkel α₂ der Teilstrahlen 67.1-67.3 kann über den Kreisradius der zweiten Sendeblenden 66.1-66.3 eingestellt werden; je kleiner der Kreisradius der zweiten Sendeblenden 66.1-66.3 ist, umso grösser ist der zweite Öffnungswinkel α₂ der Teilstrahlen 67.1-67.3.

Die Strahlungsleistung des Laserstrahls hinter der Sendeblendenanordnung kann über die Sendefläche der Sendeblendenanordnung und über die Durchlässigkeit der Sendeblenden angepasst werden. Die Sendefläche einer Sendeblendenanordnung ist im Allgemeinen als Summe aus den einzelnen Flächeninhalten der Sendeblenden definiert. Wenn die Sendeblenden die gleichen Abmessungen aufweisen, kann die Sendefläche auch als Produkt aus der Anzahl der Sendeblenden und dem Flächeninhalt der Sendeblenden berechnet werden. Je kleiner das Verhältnis der Sendefläche zur Querschnittsfläche des Laserstrahls unmittelbar vor der Sendeblendenanordnung ist, umso kleiner ist die Strahlungsleistung des transmittierten Anteils des Laserstrahls hinter der Sendeblendenanordnung.

**FIG. 3** zeigt schematisch die optische Distanzmessung an einem Flächenretroreflektor **71** mit Hilfe der in FIG. 1 dargestellten Vorrichtung 10. Die Distanzmesseinrichtung 11 erzeugt mit Hilfe der Sendeoptik 35 den kollimierten Laserstrahl 51. Im Strahlengang des kollimierten Laserstrahls 51 ist ein Laserstrahlformungselement **72** angeordnet, das für die Distanzmessung an Flächenretroreflektoren ausgelegt ist.

Das Laserstrahlformungselement 72 ist als Formungsblende mit einer kreisförmigen Blendengeometrie ausgebildet. Die Formungsblende 72 formt den auftreffenden Laserstrahl 51 in einen geformten Laserstrahl **74** mit einem Öffnungswinkel β um, wobei der Öffnungswinkel β des geformten Laserstrahls 74 kleiner als ein maximaler Grenzwinkel βₘₐₓ von 0,3 mrad ist. Der Öffnungswinkel β des geformten Laserstrahls 74 kann über den Kreisradius der Formungsblende 72 eingestellt werden. Dabei gilt, je grösser der Kreisradius der Formungsblende 72 ist, umso kleiner ist der Öffnungswinkel β des geformten Laserstrahls 74.

Eine Formungsblende ist charakterisiert durch ihren Flächeninhalt und ihre Abmessungen. Der maximale Grenzwinkel βₘₐₓ von 0,3 mrad lässt sich in eine minimale Abmessung für die Formungsblende umrechnen, die von der Formungsblende nicht unterschritten werden darf. Die Blendengeometrie einer Formungsblende bestimmt, ob der geformte Laserstrahl einen Öffnungswinkel oder mehrere Öffnungswinkel aufweist. Formungsblenden mit einer kreisförmigen oder quadratischen Blendengeometrie sind durch eine Abmessung (Kreisradius, Seitenlänge des Quadrats) definiert und erzeugen Laserstrahlen, die einen kreisförmigen Strahlquerschnitt mit einem in Umfangsrichtung konstanten Öffnungswinkel aufweisen. Formungsblenden mit einer elliptischen oder rechteckigen Blendengeometrie sind durch zwei Abmessungen definiert und erzeugen Laserstrahl, die einen elliptischen Strahlquerschnitt mit einem in Umfangsrichtung variierenden Öffnungswinkel aufweisen, wobei der Öffnungswinkel des elliptischen Laserstrahls in Umfangsrichtung zwischen einem maximalen Öffnungswinkel auf der großen Halbachse und einem minimalen Öffnungswinkel auf der kleinen Halbachse des elliptischen Strahlquerschnitts variiert. Formungsblenden mit einer beliebigen Blendengeometrie erzeugen hinter der Formungsblende Laserstrahlen mit mehreren Öffnungswinkeln, die zwischen einem minimalen Öffnungswinkel und einem maximalen Öffnungswinkel liegen.

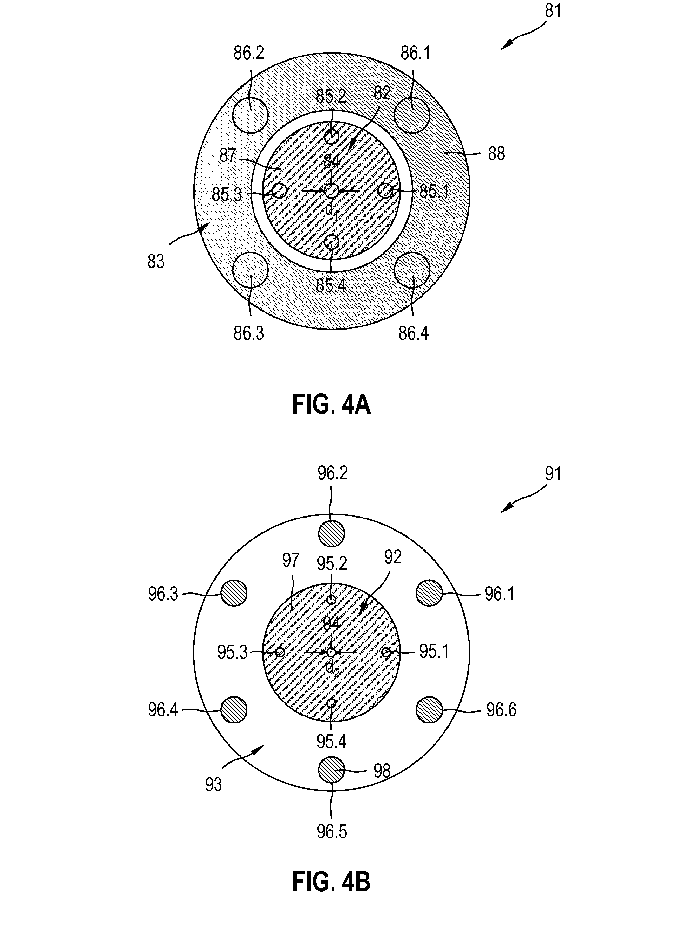

**FIGN. 4A****, B** zeigen eine erste und zweite Ausführungsform eines ersten Formungselementes mit Laser- und Empfangsstrahlformungselementen, die für die optische Distanzmessung zu Einzelretroreflektoren in unterschiedlichen Entfernungsbereichen ausgelegt sind. Die Distanzmessung erfolgt beispielsweise mit Hilfe der in FIG. 1 dargestellten Vorrichtung 10.

FIG. 4A zeigt eine erste Ausführungsform eines ersten Formungselementes **81,** das ein Laserstrahlformungselement **82** und ein Empfangsstrahlformungselement **83** aufweist. Das Laserstrahlformungselement 82 ist als Sendeblendenanordnung mit fünf Sendeblenden **84, 85.1-85.4** ausgebildet, die den auftreffenden Laserstrahl in fünf Teilstrahlen unterteilen. Die Sendeblenden 84, 85.1-85.4 weisen eine kreisförmige Blendengeometrie mit einem ersten Durchmesser **d₁** auf und weiten die Teilstrahlen durch Beugung auf einen Öffnungswinkel von 1,0 mrad auf. Das Empfangsstrahlformungselement 83 ist als Empfangsblendenanordnung mit vier Empfangsblenden **86.1-86.4** ausgebildet, die ringförmig um das Laserstrahlformungselement 82 verteilt sind. Die Empfangsblenden 86.1-86.4 weisen eine kreisförmige Blendengeometrie mit dem gleichen Durchmesser auf.

Die Strahlungsleistung des ausgesandten Laserstrahls 41 ist für die Distanzmessung zu streuenden Zielobjekten ausgelegt. Bei streuenden Zielobjekten wird der Laserstrahl über einen großen Winkelbereich gestreut, nur ein geringer Teil der Strahlungsleistung wird von der Empfangsoptik 36 erfasst und an den Detektor 32 weitergeleitet. Bei der Distanzmessung zu reflektierenden Zielobjekten wird der Laserstrahl am Zielobjekt reflektiert und trifft als gerichteter Empfangsstrahl auf den Detektor 32. Um bei der Distanzmessung zu reflektierenden Zielobjekten ein Übersteuern des Detektors 32 zu verhindern, muss die Strahlungsleistung des auf den Detektor 32 auftreffenden Empfangsstrahls 42 deutlich kleiner als die Strahlungsleistung des von der Strahlquelle 31 ausgesandten Laserstrahls 41 sein. Dabei kann die Reduzierung der Strahlungsleistung über Maßnahmen im Strahlengang des Laserstrahls 41 und/oder über Maßnahmen im Strahlengang des Empfangsstrahls 42 erfolgen.

Die Strahlungsleistung des Laserstrahls 41 kann über die Sendefläche der Sendeblendenanordnung 82 und über die Durchlässigkeit der Sendeblenden 84, 85.1-85.4 eingestellt werden. Die Sendefläche einer Sendeblendenanordnung ist im Allgemeinen als Summe aus den einzelnen Flächeninhalten der Sendeblenden definiert. Wenn die Sendeblenden, wie im Ausführungsbeispiel, die gleichen Abmessungen aufweisen, kann die Sendefläche auch als Produkt aus der Anzahl der Sendeblenden und dem Flächeninhalt der Sendeblenden berechnet werden. Je kleiner das Verhältnis der Sendefläche zur Querschnittsfläche des Laserstrahls 41 unmittelbar vor der Sendeblendenanordnung 82 ist, umso kleiner ist die Strahlungsleistung des Laserstrahls 41 hinter der Sendeblendenanordnung 82.

Alternativ oder zusätzlich zur Sendefläche kann die Strahlungsleistung des Laserstrahls 41 über die Durchlässigkeit der Sendeblenden 84, 85.1-85.4 eingestellt werden. Die Sendeblenden 84, 85.1-85.4 sind im Ausführungsbeispiel mit einem optischen Filter 87 versehen, der beispielsweise als Neutraldichtefilter oder als Farbfilter ausgebildet ist. Die Dämpfung des Laserstrahls kann über den Transmissionsgrad des optischen Filters eingestellt werden, der als Verhältnis von durchgelassener Strahlungsleistung zu einfallender Strahlungsleistung des Laserstrahls definiert ist. Die Durchlässigkeit der Sendeblenden 84, 85.1-85.4 beeinflusst ausschließlich die Strahlungsleistung des Laserstrahls 41, wohingegen die Sendefläche, die von den Abmessungen der Sendeblenden 84, 85.1-85.4 abhängt, die Strahlungsleistung und die Öffnungswinkel der Teilstrahlen verändert. Über die Durchlässigkeit der Sendeblenden 84, 85.1-85.4 besteht die Möglichkeit, die Strahlungsleistung des Laserstrahls 41 zu reduzieren, ohne die Öffnungswinkel der Teilstrahlen zu verändern.

Die Strahlungsleistung des Empfangsstrahls 42 kann über die Empfangsfläche der Empfangsblendenanordnung 83 und über die Durchlässigkeit der Empfangsblenden 86.1-86.4 eingestellt werden. Die Empfangsfläche einer Empfangsblendenanordnung ist im Allgemeinen als Summe aus den einzelnen Flächeninhalten der Empfangsblenden 86.1-86.4 definiert. Wenn die Empfangsblenden, wie im Ausführungsbeispiel, die gleichen Abmessungen aufweisen, kann die Empfangsfläche auch als Produkt aus der Anzahl der Empfangsblenden und dem Flächeninhalt der Empfangsblenden berechnet werden. Je kleiner das Verhältnis der Empfangsfläche zur Querschnittsfläche des Empfangsstrahls 42 unmittelbar vor der Empfangsblendenanordnung 83 ist, umso kleiner ist die Strahlungsleistung des Empfangsstrahls 42 hinter der Empfangsblendenanordnung 83. Die Dämpfung des Empfangsstrahls 42 über eine Begrenzung der Empfangsfläche ist unabhängig von der Wellenlänge der Strahlquelle 31, so dass auch Fremdlicht, beispielsweise Sonnenlicht mit einem breiten Wellenlängenspektrum, ohne zusätzlichen Aufwand gedämpft wird.

Alternativ oder zusätzlich zur Empfangsfläche kann die Strahlungsleistung des Empfangsstrahls 42 über die Durchlässigkeit der Empfangsblenden 86.1-86.4 angepasst werden. Die Empfangsblenden 86.1-86.4 sind im Ausführungsbeispiel mit einem optischen Filter **88** versehen, der beispielsweise als Neutraldichtefilter oder als Farbfilter ausgebildet ist. Die Dämpfung des Empfangsstrahls kann über den Transmissionsgrad des optischen Filters eingestellt werden, der als Verhältnis von durchgelassener Strahlungsleistung zu einfallender Strahlungsleistung des Empfangsstrahls definiert ist.

Die optischen Filter 87, 88 sind als Neutraldichtefilter oder als Farbfilter ausgebildet. Bei Neutraldichtefiltern wird ein breiter Wellenlängenbereich gedämpft, wohingegen bei Farbfiltern ein schmaler Wellenlängenbereich um die Wellenlänge der Strahlquelle 31 gedämpft wird. Die Dämpfung der Strahlungsleistung über die Durchlässigkeit einer Blende (Sendeblende oder Empfangsblende) bietet die Möglichkeit, die Strahlungsleistung anzupassen, ohne die Öffnungswinkel der gebeugten Strahlen zu verändern. Die Verwendung von Neutraldichtefiltern hat den Vorteil, dass neben der Wellenlänge der Strahlquelle 31 ein breiter Wellenlängenbereich gedämpft wird, der auch Fremdlicht umfasst. Daher eignen sich Neutraldichtefilter speziell dann, wenn auch Fremdlicht gedämpft werden soll. Außerdem haben Neutraldichtefilter den Vorteil, dass sie als Kunststofffolien kostengünstig verfügbar sind.

FIG. 4B zeigt eine zweite Ausführungsform eines ersten Formungselementes **91**, das ein Laserstrahlformungselement **92** und ein Empfangsstrahlformungselement **93** aufweist. Das Laserstrahlformungselement 92 ist als Sendeblendenanordnung mit fünf kreisförmigen Sendeblenden **94, 95.1-95.4** ausgebildet, die analog zu den Sendeblenden 84, 85.1-85.4 der FIG. 4A um die optische Achse des kollimierten Laserstrahls 51 angeordnet sind. Das Empfangsstrahlformungselement 93 ist als Empfangsblendenanordnung mit sechs kreisförmigen Empfangsblenden **96.1-96.6** ausgebildet, die ringförmig um das Laserstrahlformungselement 92 angeordnet sind.

Die Sendeblenden 94, 95.1-95.4 der FIG. 4B unterscheiden sich im Durchmesser von den Sendeblenden 84, 85.1-85.4 der FIG. 4A. Im Ausführungsbeispiel weisen die Sendeblenden 94, 95.1-95.4 einen zweiten Durchmesser **d₂** auf und weiten die fünf Teilstrahlen auf einen Öffnungswinkel von 2,0 mrad auf. Die kreisförmigen Empfangsblenden 96.1-96.6 der FIG. 4B weisen einen kleineren Durchmesser als die kreisförmigen Empfangsblenden 86.1-86.4 der FIG. 4A auf. Die Sendeblenden 94, 95.1-95.4 und die Empfangsblenden 96.1-96.6 sind teildurchlässig ausgebildet. Die Sendeblenden 94, 95.1-95.4 sind mit einem optischen Filter **97** und die Empfangsblenden 96.1-96.6 mit einem optischen Filter **98** versehen. Über den Transmissionsgrad der optischen Filter 97, 98 kann die Strahlungsleistung, die auf den Detektor 32 trifft, angepasst werden.

Die Sendeblenden 84, 85.1-85.4, 94, 95.1-95.4 und Empfangsblenden 86.1-86.4, 96.1-96.6 weisen kreisförmige Blendengeometrien auf. Kreisförmige Sende- und Empfangsblenden stellen die bevorzugte Blendengeometrie dar. Die Sendeblenden 84, 85.1-85.4 der FIG. 4A weisen einen Durchmesser d₁ auf und erzeugen Teilstrahlen mit einem in Umfangsrichtung konstanten Öffnungswinkel von 1,0 mrad. Die Sendeblenden 94, 95.1-95.4 der FIG. 4B weisen einen Durchmesser d₂ auf und erzeugen Teilstrahlen mit einem in Umfangsrichtung konstanten Öffnungswinkel von 2,0 mrad. Grundsätzlich können auch Sende- und Empfangsblenden mit einer nicht-kreisförmigen Blendengeometrie eingesetzt werden. Bei Sende- und Empfangsblenden mit einer elliptischen oder rechteckigen Blendengeometrie weisen die Strahlen hinter der Blendenanordnung einen elliptischen Strahlquerschnitt mit in Umfangsrichtung variierenden Öffnungswinkeln auf.

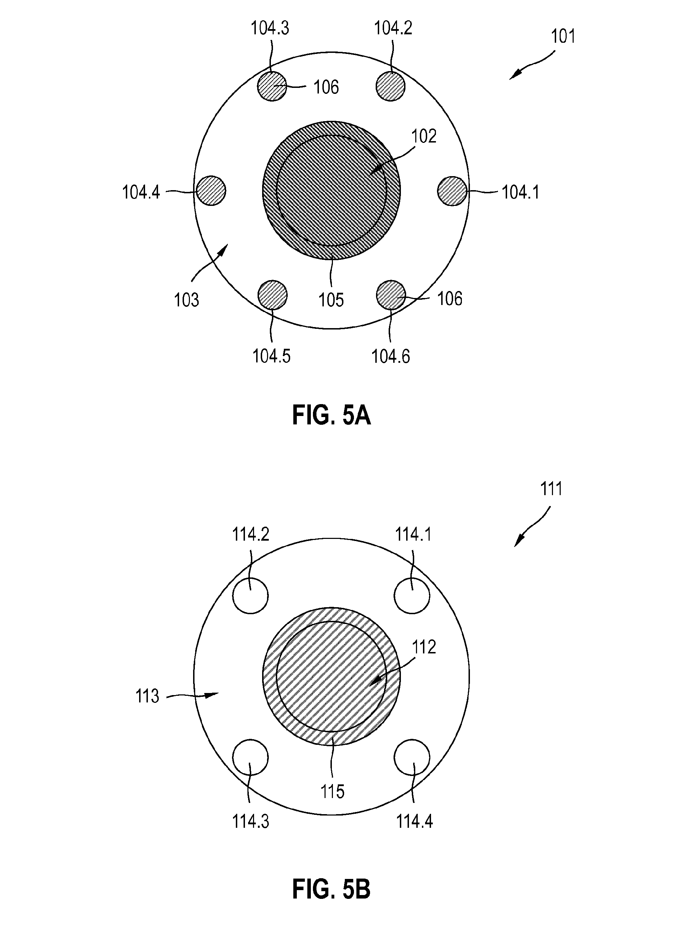

**FIGN. 5A****, B** zeigen eine erste und zweite Ausführungsform eines zweiten Formungselementes mit Laser- und Empfangsstrahlformungselementen, die für die optische Distanzmessung zu Flächenretroreflektoren in unterschiedlichen Entfernungsbereichen ausgelegt sind. Die Distanzmessung erfolgt beispielsweise mit Hilfe der in FIG. 1 dargestellten Vorrichtung 10.

FIG. 5A zeigt eine erste Ausführungsform eines zweiten Formungselementes **101**, das ein Laserstrahlformungselement **102** und ein Empfangsstrahlformungselement **103** aufweist. Das Laserstrahlformungselement 102 ist als erste Formungsblende ausgebildet, die den auftreffenden Laserstrahl homogenisiert und in einen geformten Laserstrahl mit einem ersten Öffnungswinkel β₁ umformt. Eine Beugung des Laserstrahls ist nicht völlig zu vermeiden, wobei der erste Öffnungswinkel β₁ des geformten Laserstrahls kleiner als der maximale Grenzwinkel von βₘₐₓ 0,3 mrad ist. Das Empfangsstrahlformungselement 103 ist als Empfangsblendenanordnung mit sechs kreisförmigen Empfangsblenden **104.1-104.6** ausgebildet, die ringförmig um das Laserstrahlformungselement 102 angeordnet sind.

Die bei Flächenretroreflektoren erforderliche Reduzierung der Strahlungsleistung des auftreffenden Empfangsstrahls kann über die Formungsblende 102 und die Empfangsblenden 104.1-104.6 erfolgen. Die Strahlungsleistung des Laserstrahls 41 kann über den Flächeninhalt und die Durchlässigkeit der Formungsblende 102 eingestellt werden und die Strahlungsleistung des Empfangsstrahls 42 über die Empfangsfläche der Empfangsblendenanordnung 103 und die Durchlässigkeit der Empfangsblenden 104.1-104.6. Die Formungsblende 102 und die Empfangsblenden 104.1-104.6 sind im Ausführungsbeispiel teildurchlässig ausgebildet. Die Formungsblende 102 ist mit einem optischen Filter **105** versehen und die Empfangsblenden 104.1-104.6 sind mit einem optischen Filter **106** versehen.

FIG. 5B zeigt eine zweite Ausführungsform eines zweiten Formungselementes **111**, das ein Laserstrahlformungselement **112** und ein Empfangsstrahlformungselement **113** aufweist. Das Laserstrahlformungselement 112 ist als zweite Formungsblende ausgebildet, die den auftreffenden Laserstrahl homogenisiert und in einen geformten Laserstrahl mit einem zweiten Öffnungswinkel β₂ umformt. Das Empfangsstrahlformungselement 113 ist als Empfangsblendenanordnung mit vier kreisförmigen Empfangsblenden **114.1-114.4** ausgebildet, die ringförmig um das Laserstrahlformungselement 112 angeordnet sind. Die Empfangsblenden 114.1-114.4 der FIG. 5B weisen einen größeren Durchmesser als die Empfangsblenden 104.1-104.6 der FIG. 5A auf.

Die zweite Formungsblende 112 ist für die Wellenlänge des Laserstrahls teildurchlässig ausgebildet. Dazu ist die Formungsblende 112 mit einem optischen Filter **115** versehen, der im Bereich der Wellenlänge des Laserstrahls einen Transmissionsgrad keiner als 100 % aufweist, beispielsweise 20 %. Die Empfangsblenden 114.1-114.4 sind für den reflektierten Empfangsstrahl im Ausführungsbeispiel volldurchlässig ausgebildet. Alternativ können die Empfangsblenden 114.1-114.4 für den reflektierten Empfangsstrahl teildurchlässig ausgebildet sein. Die Strahlungsleistung des Empfangsstrahls, die auf den Detektor 32 trifft, kann neben der Empfangsfläche der Empfangsblendenanordnung 113 über die Durchlässigkeit der Empfangsblenden 114.1-114.4 eingestellt werden.

Die Formungsblenden 102, 112 und die Empfangsblenden 104.1-104.6, 114.1-114.4 weisen kreisförmige Blendengeometrien auf. Kreisförmige Formungs- und Empfangsblenden stellen die bevorzugte Blendengeometrie dar. Die Formungsblenden 102, 112 weisen einen Kreisdurchmesser auf und erzeugen Teilstrahlen mit einem in Umfangsrichtung konstanten Öffnungswinkel. Grundsätzlich können auch Formungs- und Empfangsblenden mit einer nicht-kreisförmigen Blendengeometrie eingesetzt werden. Bei Formungs- und Empfangsblenden mit einer elliptischen oder rechteckigen Blendengeometrie weisen die Strahlen hinter den Blenden einen Strahlquerschnitt mit in Umfangsrichtung variierenden Öffnungswinkeln auf.

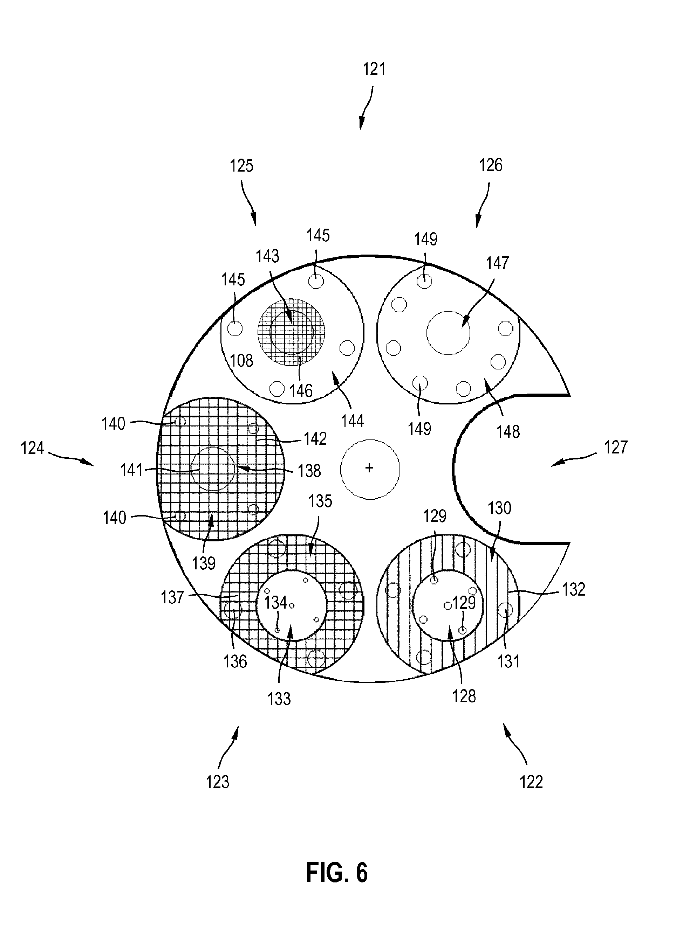

**FIG. 6** zeigt eine erste Ausführungsform einer Anpasseinrichtung **121** mit zwei ersten Formungselementen **122, 123,** die zur optischen Distanzmessung zu Einzelretroreflektoren ausgebildet sind, drei zweiten Formungselementen **124, 125, 126**, die zur optischen Distanzmessung zu Flächenretroreflektoren ausgebildet sind, und einem Strahldurchlass **127**, der zur Distanzmessung zu streuenden Zielobjekten ausgebildet ist. Die Distanzmessung erfolgt beispielsweise mit Hilfe der in FIG. 1 dargestellten Vorrichtung 10.

Das erste Formungselement 122 umfasst ein, als Sendeblendenanordnung mit fünf kreisförmigen Sendeblenden **129** ausgebildetes, Laserstrahlformungselement **128** und ein, als Empfangsblendenanordnung mit vier kreisförmigen Empfangsblenden **131** ausgebildetes, Empfangsstrahlformungselement **130**, wobei die Empfangsblenden 131 mit einem optischen Filter **132** versehen und für den reflektierten Empfangsstrahl teildurchlässig ausgebildet sind. Das weitere, erste Formungselement 123 umfasst ein, als Sendeblendenanordnung mit fünf kreisförmigen Sendeblenden **134** ausgebildetes, Laserstrahlformungselement **133** und ein, als Empfangsblendenanordnung **135** mit vier kreisförmigen Empfangsblenden ausgebildetes, Empfangsstrahlformungselement **136**, wobei die Empfangsblenden 136 mit einem optischen Filter **137** versehen und für den reflektierten Empfangsstrahl teildurchlässig ausgebildet sind.

Die ersten Formungselemente 122, 123 unterscheiden sich im Durchmesser der Sendeblenden 129, 134, im Durchmesser der Empfangsblenden 131, 136 und in der Durchlässigkeit der Empfangsblenden 131, 136 voneinander. Das erste Formungselement 122 ist beispielsweise für Distanzmessungen im Entfernungsbereich von 30 m bis 100 m vorgesehen und das erste Formungselement 123 ist für Distanzmessungen im Entfernungsbereich bis 30 m vorgesehen.

Das zweite Formungselement 124 umfasst ein, als kreisförmige Formungsblende ausgebildetes, Laserstrahlformungselement **138** und ein, als Empfangsblendenanordnung mit vier kreisförmigen Empfangsblenden **140** ausgebildetes, Empfangsstrahlformungselement **139**. Die Formungsblende 138 ist mittels eines optischen Filters **141** für den Laserstrahl teildurchlässig ausgebildet und die Empfangsblenden 140 sind mittels eines optischen Filters **142** für den reflektierten Empfangsstrahl teildurchlässig ausgebildet. Das weitere, zweite Formungselement 125 umfasst ein, als kreisförmige Formungsblende ausgebildetes, Laserstrahlformungselement **143** und ein, als Empfangsblendenanordnung mit vier kreisförmigen Empfangsblenden **145** ausgebildetes, Empfangsstrahlformungselement **144**, wobei die Formungsblende 143 mittels eines optischen Filters **146** für den Laserstrahl teildurchlässig ausgebildet ist. Das weitere, zweite Formungselement 126 umfasst ein, als kreisförmige Formungsblende ausgebildetes, Laserstrahlformungselement **147** und ein, als Empfangsblendenanordnung mit sieben kreisförmigen Empfangsblenden **149** ausgebildetes, Empfangsstrahlformungselement **148**, wobei die Formungsblende 147 und die Empfangsblenden 149 für den Laserstrahl und den Empfangsstrahl volldurchlässig ausgebildet sind.

Die zweiten Formungselemente 124, 125, 126 unterscheiden sich im Durchmesser der Formungsblende 138, 143, 147, in der Durchlässigkeit der Formungsblende 138, 143, 147, im Durchmesser der Empfangsblenden 140, 145, 149, in der Anzahl der Empfangsblenden 140, 145, 149 und/oder in der Durchlässigkeit der Empfangsblenden 140, 145, 149 voneinander. Das zweite Formungselement 124 ist beispielsweise für Distanzmessungen zu Katzenaugen im Entfernungsbereich bis 10 m vorgesehen, das zweite Formungselement 125 für Distanzmessungen zu Katzenaugen im Entfernungsbereich von 10 m bis 100 m und das zweite Formungselement 126 für Distanzmessungen zu Katzenaugen im Entfernungsbereich über 100 m. Die angegebenen Entfernungsbereiche sind beispielhaft für gut reflektierende Katzenaugen angegeben und sind von der Qualität des Flächenretroreflektors abhängig. Dabei gilt die Regel, dass die Dämpfung des Laserstrahls und des Empfangsstrahls mit abnehmender Qualität des Flächenretroreflektors geringer werden sollte.

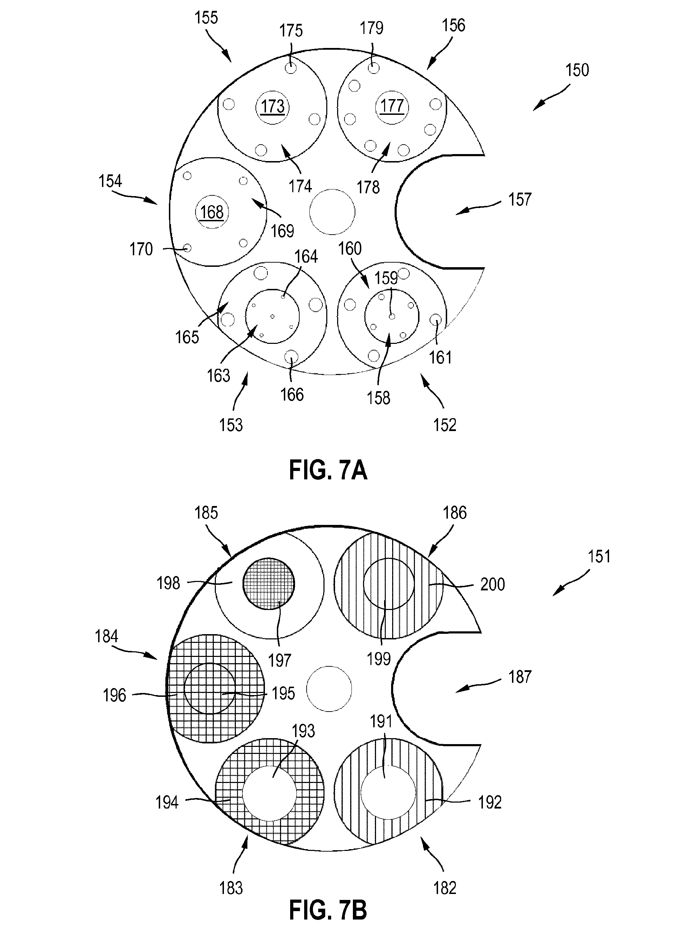

**FIGN. 7A****, B** zeigen eine zweite Ausführungsform einer Anpasseinrichtung mit einer ersten Anpasseinrichtung **150** (FIG. 7A) und einer zweiten Anpasseinrichtung **151** (FIG. 7B), wobei die erste Anpasseinrichtung 150 erste Formungselemente für die Distanzmessung zu Einzelretroreflektoren und zweite Formungselementen für die Distanzmessung zu Flächenretroreflektoren aufweist und die zweite Anpasseinrichtung 151 Dämpfungselemente zum Dämpfen der Strahlungsleistung des Laser- und/oder Empfangsstrahls aufweist. Die Distanzmessung erfolgt beispielsweise mit Hilfe der in FIG. 1 dargestellten Vorrichtung 10.

Die erste Anpasseinrichtung 150 umfasst zwei erste Formungselemente **152, 153**, die zur optischen Distanzmessung zu Einzelretroreflektoren ausgebildet sind, drei zweite Formungselemente **154, 155, 156,** die zur optischen Distanzmessung zu Flächenretroreflektoren ausgebildet sind, und einen Strahldurchlass **157**, der zur Distanzmessung zu streuenden Zielobjekten ausgebildet ist. Das erste Formungselement 152 umfasst ein, als Sendeblendenanordnung mit fünf kreisförmigen Sendeblenden **159** ausgebildetes, Laserstrahlformungselement **158** und ein, als Empfangsblendenanordnung mit vier kreisförmigen Empfangsblenden **161** ausgebildetes, Empfangsstrahlformungselement **160**. Das weitere, erste Formungselement 153 umfasst ein, als Sendeblendenanordnung mit fünf kreisförmigen Sendeblenden **164** ausgebildetes, Laserstrahlformungselement **163** und ein, als Empfangsblendenanordnung **165** mit vier kreisförmigen Empfangsblenden ausgebildetes, Empfangsstrahlformungselement **166**.

Die ersten Formungselemente 152, 153 unterscheiden sich im Durchmesser der Sendeblenden 159, 164 und im Durchmesser der Empfangsblenden 161, 166 voneinander. Das erste Formungselement 152 ist beispielsweise für Distanzmessungen im Entfernungsbereich von 30 m bis 100 m vorgesehen und das erste Formungselement 153 ist für Distanzmessungen im Entfernungsbereich bis 30 m vorgesehen.

Das zweite Formungselement 154 umfasst ein, als kreisförmige Formungsblende ausgebildetes, Laserstrahlformungselement **168** und ein, als Empfangsblendenanordnung mit vier kreisförmigen Empfangsblenden **170** ausgebildetes, Empfangsstrahlformungselement **169**. Das weitere, zweite Formungselement 155 umfasst ein, als kreisförmige Formungsblende ausgebildetes, Laserstrahlformungselement **173** und ein, als Empfangsblendenanordnung mit vier kreisförmigen Empfangsblenden **175** ausgebildetes, Empfangsstrahlformungselement **174**. Das weitere, zweite Formungselement 156 umfasst ein, als kreisförmige Formungsblende ausgebildetes, Laserstrahlformungselement **177** und ein, als Empfangsblendenanordnung mit sieben kreisförmigen Empfangsblenden **179** ausgebildetes, Empfangsstrahlformungselement **178**.

Die zweiten Formungselemente 154, 155, 156 unterscheiden sich im Durchmesser der Formungsblende 168, 173, 177, im Durchmesser der Empfangsblenden 170, 175, 179 und/oder in der Anzahl der Empfangsblenden 170, 175, 179 voneinander. Das zweite Formungselement 154 ist beispielsweise für Distanzmessungen zu Reflexionsfolien im Entfernungsbereich bis 5 m vorgesehen, das zweite Formungselement 155 für Distanzmessungen zu Reflexionsfolien im Entfernungsbereich von 5 m bis 30 m und das zweite Formungselement 156 für Distanzmessungen zu Reflexionsfolien im Entfernungsbereich über 30 m. Die angegebenen Entfernungsbereiche sind beispielhaft für gut reflektierende Reflexionsfolien angegeben und sind von der Qualität des Flächenretroreflektors abhängig. Dabei gilt die Regel, dass die Dämpfung des Laserstrahls und des Empfangsstrahls mit abnehmender Qualität des Flächenretroreflektors geringer werden sollte.

Die zweite Anpasseinrichtung 151 umfasst fünf Dämpfungselemente **182-186**, die zur Distanzmessung zu reflektierenden Zielobjekten ausgebildet sind, und einen Strahldurchlass **187**, der zur Distanzmessung zu streuenden Zielobjekten ausgebildet ist. Die Dämpfungselemente 182-186 umfassen jeweils ein Laserstrahldämpfungselement, das in den Strahlengang des Laserstrahls 41 anordbar ist, und ein Empfangsstrahldämpfungselement, das in den Strahlengang des Empfangsstrahls 42 anordbar ist. Bei der Distanzmessung zu einem reflektierenden Zielobjekt können die Formungselemente 152-156 der ersten Anpasseinrichtung 150 und die Dämpfungselemente 182-186 der zweiten Anpasseinrichtung 151 miteinander kombiniert werden.

Das erste Dämpfungselement 182 umfasst ein volldurchlässiges erstes Laserstrahldämpfungselement **191** und ein teildurchlässiges erstes Empfangsstrahldämpfungselement **192** mit einem ersten Transmissionsgrad **TE₁**. Das zweite Dämpfungselement 183 umfasst ein volldurchlässiges zweites Laserstrahldämpfungselement **193** und ein teildurchlässiges zweites Empfangsstrahldämpfungselement **194** mit einem zweiten Transmissionsgrad **TE₂.** Das erste und zweite Empfangsstrahldämpfungselement 192, 194 unterscheiden sich im Transmissionsgrad TE₁, TE₂ voneinander, beispielsweise ist der erste Transmissionsgrad TE₁ des ersten Empfangsstrahldämpfungselementes 192 doppelt so groß wie der zweite Transmissionsgrad TE₂ des zweiten Empfangsstrahldämpfungselementes 194.

Das dritte Dämpfungselement 184 umfasst ein teildurchlässiges drittes Laserstrahldämpfungselement **195** und ein teildurchlässiges drittes Empfangsstrahldämpfungselement **196**. Im Ausführungsbeispiel stimmen der Transmissionsgrad **TS₃** des dritten Laserstrahldämpfungselementes 195 und der Transmissionsgrad **TE₃** des dritten Empfangsstrahldämpfungselementes 196 überein. Alternativ können die Transmissionsgrade TS₃, TE₃ des dritten Laserstrahldämpfungselementes 195 und des dritten Empfangsstrahldämpfungselementes 196 voneinander verschieden sein.

Das vierte Dämpfungselement 185 umfasst ein teildurchlässiges viertes Laserstrahldämpfungselement **197** mit einem vierten Transmissionsgrad **TS₄** und ein volldurchlässiges viertes Empfangsstrahldämpfungselement **198**. Der Transmissionsgrad TS₄ des vierten Laserstrahldämpfungselementes 197 beträgt beispielsweise 5 %.

Das fünfte Dämpfungselement 186 umfasst ein teildurchlässiges fünftes Laserstrahldämpfungselement **199** mit einem fünften Transmissionsgrad **TS₅** und ein teildurchlässiges fünftes Empfangsstrahldämpfungselement **200** mit einem fünften Transmissionsgrad **TE₅.** Im Ausführungsbeispiel stimmen der Transmissionsgrad TS₅ des fünften Laserstrahldämpfungselementes 199 und der Transmissionsgrad TE₅ des fünften Empfangsstrahldämpfungselementes 200 überein. Alternativ können die Transmissionsgrade TS₅, TE₅ des fünften Laserstrahldämpfungselementes 199 und des fünften Empfangsstrahldämpfungselementes 200 voneinander verschieden sein.

## Patentansprüche

1. Vorrichtung (10) zur optischen Distanzmessung zu einem reflektierenden Zielobjekt (47; 61, 71), aufweisend:
▪ eine Strahlquelle (31), die als elektro-optische Komponente ausgebildet ist und einen Laserstrahl (41) aussendet,
▪ einen Detektor (32), der als weitere elektro-optische Komponente ausgebildet ist und einen am Zielobjekt (47) reflektierten Empfangsstrahl (42) empfängt,
▪ ein Strahlformungssystem (33) mit einer Sendeoptik (35), die den Laserstrahl (41) formt, und einer Empfangsoptik (36), die den Empfangsstrahl (42) formt,
▪ ein Laserstrahlformungselement (62, 65; 82, 92; 128, 133; 158, 163), das in den Strahlengang des Laserstrahls (41) anordbar ist,
**dadurch gekennzeichnet, dass** das Laserstrahlformungselement als Sendeblendenanordnung (62, 65; 82, 92; 128, 133; 158, 163) mit mindestens einer Sendeblende (63, 66.1-66.3; 84, 85.1-85.4, 94, 95.1-95.4; 129, 134; 159, 164) ausgebildet ist, wobei die mindestens eine Sendeblende einen Teilstrahl (64, 67.1-67.3) erzeugt und den Teilstrahl (64, 67.1-67.3) auf einen oder mehrere Öffnungswinkel (α₁, α₂) aufweitet, die nicht kleiner als ein minimaler Grenzwinkel (αₘᵢₙ) von 1,0 mrad sind.

2. Vorrichtung nach Anspruch 1, **dadurch gekennzeichnet, dass** die Sendeblendenanordnung (65; 82, 92; 128, 133; 158, 163) mehrere Sendeblenden (66.1-66.3; 84, 85.1-85.4, 94, 95.1-95.4; 129, 134; 159, 164) aufweist, wobei die Sendeblenden (66.1-66.3) mehrere Teilstrahlen (67.1-67.3) erzeugen und die Teilstrahlen (67.1-67.3) jeweils auf einen oder mehrere Öffnungswinkel (α₂) aufweiten, die nicht kleiner als der minimale Grenzwinkel (αₘᵢₙ) von 1,0 mrad sind.

3. Vorrichtung nach einem der Ansprüche 1 bis 2, **dadurch gekennzeichnet, dass** die Sendeblenden (84, 85.1-85.4, 94, 95.1-95.4) für den Laserstrahl (41) teildurchlässig ausgebildet sind.

4. Vorrichtung nach einem der Ansprüche 1 bis 3, **gekennzeichnet durch** ein erstes Laserstrahlformungselement (62; 82; 128; 158), das in den Strahlengang des Laserstrahls (41) anordbar ist und als erste Sendeblendenanordnung (62; 82; 128; 158) mit mindestens einer ersten Sendeblende (63; 84, 85.1-85.4; 129; 159) ausgebildet ist, und ein zweites Laserstrahlformungselement (65; 92; 133; 163), das in den Strahlengang des Laserstrahls (41) anordbar ist und als zweite Sendeblendenanordnung (65; 92; 133; 163) mit mindestens einer zweiten Sendeblende (66.1-66.3; 94, 95.1-95.4; 134; 164) ausgebildet ist, wobei die erste und zweite Sendeblendenanordnung (62, 65; 82, 92; 128, 133; 158, 163) voneinander verschieden sind.

5. Vorrichtung nach Anspruch 4, **dadurch gekennzeichnet, dass** die erste und zweite Sendeblendenanordnung (62, 65; 82, 92; 128, 133; 158, 163) in den Abmessungen der ersten und zweiten Sendeblenden (63, 66; 84, 85.1-85.4, 94, 95.1-95.4; 129, 134; 159, 164) voneinander verschieden sind.

6. Vorrichtung nach einem der Ansprüche 4 bis 5, **dadurch gekennzeichnet, dass** die erste und zweite Sendeblendenanordnung (62, 65; 82, 92) in der Anzahl der Sendeblenden (63, 66), im Flächeninhalt der Sendeblenden (84, 85.1-85.4, 94, 95.1-95.4) und/oder in der Durchlässigkeit der Sendeblenden (84, 85.1-85.4, 94, 95.1-95.4) voneinander verschieden sind.

7. Vorrichtung nach einem der Ansprüche 1 bis 6, **gekennzeichnet durch** ein weiteres Laserstrahlformungselement (72; 102, 112; 138, 143, 147; 168, 173, 177), das in den Strahlengang des Laserstrahls (41) anordbar ist und das als Formungsblende ausgebildet ist, wobei die Formungsblende (72; 102, 112; 138, 143, 147; 168, 173, 177) den Laserstrahl in einen geformten Laserstrahl (74) mit einem oder mehreren Öffnungswinkeln (β) umformt und die Öffnungswinkel (β) kleiner als ein maximaler Grenzwinkel (βₘₐₓ) von 0,3 mrad sind.

8. Vorrichtung nach Anspruch 7, **dadurch gekennzeichnet, dass** die Formungsblende (102, 112; 138, 143) für den Laserstrahl teildurchlässig ausgebildet ist.

9. Vorrichtung nach einem der Ansprüche 7 bis 8, **gekennzeichnet durch** eine erste Formungsblende (102; 138, 143; 168, 173), die in den Strahlengang des Laserstrahls (41) anordbar ist, und eine zweite Formungsblende (112; 143, 147; 173, 177), die in den Strahlengang des Laserstrahls (41) anordbar ist, wobei die erste und zweite Formungsblende (102, 112; 138, 143, 147; 168, 173, 177) in den Abmessungen der Formungsblenden (102, 112; 138, 143, 147; 168, 173, 177), im Flächeninhalt der Formungsblenden (102, 112; 138, 143, 147; 168, 173, 177) und/oder in der Durchlässigkeit der Formungsblenden (102, 112; 138, 143, 147) voneinander verschieden sind.

10. Vorrichtung nach einem der Ansprüche 1 bis 9, **gekennzeichnet durch** ein Empfangsstrahlformungselement (83, 93; 103, 113; 130, 135, 139, 144, 148; 160, 165, 169, 174, 178), das in den Strahlengang des Empfangsstrahls (42) anordbar ist und das als Empfangsblendenanordnung mit mindestens einer Empfangsblende (86.1-86.4, 96.1-96.6; 104.1-104.6, 114.1-114.4; 131, 136, 140, 145, 149; 161, 166, 170, 175, 179) ausgebildet ist.

11. Vorrichtung nach Anspruch 10, **dadurch gekennzeichnet, dass** die Empfangsblendenanordnung (83, 93; 103, 113; 130, 135, 139, 144, 148; 160, 165, 169, 174, 178) mehrere Empfangsblenden (86.1-86.4, 96.1-96.6; 104.1-104.6, 114.1-114.4; 131, 136, 140, 145, 149; 161, 166, 170, 175, 179) aufweist, die voneinander beabstandet sind.

12. Vorrichtung nach einem der Ansprüche 10 bis 11, **dadurch gekennzeichnet, dass** die Empfangsblenden (86.1-86.4, 96.1-96.6; 104.1-104.6; 131, 136, 140, 145, 149) für den Empfangsstrahl teildurchlässig ausgebildet sind.

13. Vorrichtung nach einem der Ansprüche 10 bis 12, **gekennzeichnet durch** ein erstes Empfangsstrahlformungselement (83; 103; 130, 135, 139, 144; 160, 165, 169, 174), das in den Strahlengang des Empfangsstrahls (42) anordbar ist und als erste Empfangsblendenanordnung mit mindestens einer ersten Empfangsblende (86.1-86.4; 104.1-104.6; 131, 136, 140, 145; 161, 166, 170, 175) ausgebildet ist, und ein zweites Empfangsstrahlformungselement (93; 113; 135, 139, 144, 148; 165, 169, 174, 178), das in den Strahlengang des Empfangsstrahls (42) anordbar ist und als zweite Empfangsblendenanordnung mit mindestens einer zweiten Empfangsblende (96.1-96.6; 114.1-114.4; 136, 140, 145, 149; 166, 170, 175, 179) ausgebildet ist, wobei die erste und zweite Empfangsblendenanordnung (83, 93; 103, 113; 130, 135, 139, 144, 148; 160, 165, 169, 174, 178) voneinander verschieden sind.

14. Vorrichtung nach Anspruch 13, **dadurch gekennzeichnet, dass** die erste und zweite Empfangsblendenanordnung (83, 93; 103, 113; 130, 135, 139, 144, 148; 160, 165, 169, 174, 178) in der Anzahl der Empfangsblenden (86, 96; 104, 114; 131, 136, 140, 145, 149; 161, 166, 170, 175, 179), im Flächeninhalt der Empfangsblenden (86, 96; 104, 114; 131, 136, 140, 145, 149; 161, 166, 170, 175, 179) und/oder in der Durchlässigkeit der Empfangsblenden (86, 96; 104, 114; 131, 136, 140, 145, 149) voneinander verschieden sind.

15. Vorrichtung nach einem der Ansprüche 10 bis 12, **dadurch gekennzeichnet, dass** ein, als Sendeblendenanordnung (82, 92; 128, 133; 158, 163) ausgebildetes, Laserstrahlformungselement und ein, als Empfangsblendenanordnung (83, 93; 130, 135; 160, 165) ausgebildetes, Empfangsstrahlformungselement auf einem ersten Formungselement (81, 91; 122, 123; 152, 153) angeordnet sind, wobei das erste Formungselement (81, 91; 122, 123; 152, 153) in den Strahlengang des Laserstrahls und den Strahlengang des Empfangsstrahls anordbar ist.

16. Vorrichtung nach einem der Ansprüche 10 bis 12, **dadurch gekennzeichnet, dass** ein, als Formungsblende (102, 112; 138, 143, 147; 168, 173, 177) ausgebildetes, Laserstrahlformungselement und ein, als Empfangsblendenanordnung (103, 113; 139, 144, 148; 169, 174, 178) ausgebildetes, Empfangsstrahlformungselement auf einem zweiten Formungselement (101, 111; 124, 125, 126; 154, 155, 156) angeordnet sind, wobei das zweite Formungselement (101, 111; 124, 125, 126; 154, 155, 156) in den Strahlengang des Laserstrahls und den Strahlengang des Empfangsstrahls anordbar ist.

17. Vorrichtung nach einem der Ansprüche 15 bis 16, **dadurch gekennzeichnet, dass** mindestens ein erstes Formungselement (81, 91; 122, 123; 152, 153) und mindestens ein zweites Formungselement (101, 111; 124, 125, 126; 154, 155, 156) vorgesehen sind.

18. Vorrichtung nach Anspruch 17, **dadurch gekennzeichnet, dass** mehrere erste Formungselemente (81, 91; 122, 123; 152, 153) und/oder mehrere zweite Formungselemente (101, 111; 124, 125, 126; 154, 155, 156) vorgesehen sind.
